# EUROPEAN PATENT APPLICATION

(11) **EP 1 505 544 A2**
(43) Date of publication of application: **09.02.2005**
(21) Application number: 04254635.8
(22) Date of filing: 02.08.2004
(51) Int. Cl.: G06T 7/00

(54) **Methods and apparatus for inspection of lines embedded in highly textured material**

(30) Priority: 04.08.2003 US 632823
(71) Applicant: Mitutoyo Corporation, Kanagawa 213-0012 (JP)
(72) Inventor: Venkatachalam, Vidya, Bellevue Washington 98004 (US)
(74) Representative: Skone James, Robert Edmund

(57) **Abstract**

A machine vision inspection system (10) is programmed and operated to identify one or more lines appearing in a highly-textured and/or low-contrast surface of a workpiece. In a learning mode (S205), a line-enhancing image is generated from a captured image of the workpiece. In various embodiments, the enhanced image is based on a previously determined technique governed by a selected value for an associated parameter. A line transform is used to transform (S270) the enhanced image. The transformed data is analyzed to identify local extrema corresponding to the lines to be identified. Part program instructions are created to automatically generate the line-enhancing image, to transform it, and to analyze the transformed data set to identify the lines to be detected. Line constraint(s) that characterize a consistent line arrangement are used to improve the speed and reliability of the line detection.

## Description

The invention relates systems and methods for locating lines, having known relative orientations, that are embedded in a highly-textured and/or low-contrast material.

Precision machine vision inspection systems can be used to obtain precise dimensional measurements of inspected objects and to inspect various other object characteristics. Such systems may include a computer, a camera and optical system and a precision stage that is movable in multiple directions to allow the camera to scan the features of a workpiece that is being inspected. One exemplary prior art system that is commercially available is the QUICK VISION™ series of vision inspection machines and QVPAK™ software available from Mitutoyo America Corporation (MAC), located in Aurora, IL. The features and operation of the QUICK VISION™ series of vision inspection machines, and the QVPAK™ software are generally described, for example, in the QVPAK 3D CNC Vision Measuring Machine Users Guide, published January 2003 and the QVPAK 3D CNC Vision Measuring Machine Operation Guide, published September 1996, each of which is hereby incorporated herein by reference in its entirety. This product, as exemplified by the QV 302 Pro model, for example, is able to use a microscope type optical system to provide images of a workpiece at various magnifications.

Such systems frequently include a programmable illumination system and a lens turret with lenses of various magnifications. It is common to inspect various aspects of a single object, also referred to herein as a workpiece or an inspection workpiece, using the various magnifications and various illumination settings. In contrast to so called "on line" or "in line" machine vision inspection systems that are often specifically designed to achieve a high throughput in a particular operating environment, for a particular part to be inspected that only rarely changes, precision machine vision inspection systems, such as the QUICK VISION™ system, are generally designed to facilitate flexible precision industrial inspection for a variety of different parts to be inspected.

Such vision inspection systems generally provide the capability for automated video inspection. U.S. Patent 6,542,180, which is incorporated herein by reference in its entirety, teaches a vision system that uses automated video inspection, including operations in which the lighting used to illuminate a workpiece feature is adjusted based on a plurality of selected regions of an image of the workpiece feature. As taught in the '180 patent, automated video inspection metrology instruments generally have a programming capability that allows an automatic inspection event sequence to be defined by the user for each particular workpiece configuration. This can be implemented either in a deliberate manner, such as text based programming, for example, or through a recording mode that progressively "learns" the inspection event sequence by storing a sequence of machine control instructions corresponding to a sequence of inspection operations performed by a user, or through a combination of both methods. Such a recording mode is often referred to as "learn mode" or "training mode".

In either mode, the machine control instructions are generally stored as a part program that is specific to the particular workpiece configuration. The ability to create part programs with instructions that perform a predetermined sequence of inspection operations provides several benefits, including enhanced inspection repeatability, as well as the ability to automatically execute the same part program on a plurality of compatible machine vision inspection systems and/or at a plurality of times. Additionally, the programming capability provides the ability to archive the results of the various inspection operations.

As indicated above, so called "on line" or "in line" machine vision inspection systems are generally specifically designed to achieve a high throughput in a particular operating environment, for a particular part, or feature of a part, to be inspected. European Published Patent Application 0741290 discloses an in-line system that is able to estimate local distortion angles for the weft of a textile material using a bi dimensional image transformation technique or a line detector technique, and related operations. However, the method disclosed in EP0741290 is relatively specific to identifying weft or warp angles. This method includes a number of operations that are unnecessary, inefficient, time-consuming and/or inflexible when attempting to locate a limited number of lines or other approximately linear features that may be superimposed on a highly-textured or low-contrast background, such as, for example, the warp and weft of a material. Furthermore, the '290 application does not disclose interactive programming or evaluation steps, or the like, that are useful to help relatively unskilled users adjust or adapt the method of the '290 application to generate respective sets of machine control instructions that are applicable to a respective workpiece among a variety of different workpieces.

Furthermore, such high speed on line systems are generally not directed toward precision dimensional inspection and the like. Rather, such systems typically observe objects on streaming or controllable conveyor belts, streaming webs, and the like. Thus, only comparative crude levels of positioning and dimensional measurement accuracy are provided by such high-speed on line systems.

The above-described machine vision inspection systems provide advantages, such as automated video inspection. However, in a variety of applications, it would be desirable to improve the ability of such machines to locate lines that have known relative orientations, such as, for example, parallel lines, that are embedded in, and/or superimposed on, highly-textured and/or low-contrast material without needing extensive machine operator intervention or complicated programming by the machine operator. Furthermore, in contrast to solutions developed for so called "on line" or "in line" machine vision inspection systems, for precision "off-line" or "near-line" machine vision inspection systems that are generally designed to facilitate flexible precision industrial inspection for a variety of different parts, it would be desirable to improve both the ease of programming of such systems for relatively less-skilled operators, as well as the robustness and reliability of programs for locating lines having known relative orientations, such as, for example, parallel lines, that are embedded in, and/or superimposed on, highly-textured and/or low-contrast material. Due to the low-contrast and "noisy" nature of an image of a highly-textured and/or low-contrast material having such features, the systems and methods of conventional machine vision systems used to detect such features either have lacked precision, have been complex to program, have been unreliable in operation, and/or have been slow to execute.

Accordingly, the specific problems associated with providing a relatively simple and versatile method for programming precision measurement operations usable to locate a limited number of lines embedded in and/or superimposed on a highly-textured or low-contrast background, in combination with providing sufficient robustness for such measurements, have not been addressed by conventional general-purpose precision machine vision systems or on line systems, and such systems are deficient in this regard. A precision machine vision inspection system that can overcome the foregoing problems and limitations, individually or in combination, is desirable.

In general, the lines to be identified or determined on workpieces inspectable according to the principles of this invention are generally arranged in a layout or an arrangement that is characteristic of a particular type of workpiece. That is, in various exemplary embodiments, the lines to be identified or determined are arranged in a known relative relationship or orientation relative to each other and/or to a line-like feature of the highly-textured and/or low-contrast background surface of the workpiece.

This invention provides systems and methods that reliably identify lines having known relative orientations embedded in and/or superimposed on a highly-textured and/or low-contrast material.

This invention further provides systems and methods that reliably identify lines having known relative orientations embedded in and/or superimposed on a highly-textured and/or low-contrast material using a transform that nominally generates a 2-dimensional set of values that include local extrema nominally corresponding to probable individual lines, the two dimensional coordinates of the local extrema usable to define the corresponding individual lines.

This invention separately provides systems and methods that automatically identify lines having known relative orientations embedded in and/or superimposed on a highly-textured and/or low-contrast material.

This invention further provides systems and methods that identify lines having known relative orientations embedded in and/or superimposed on a highly-textured and/or low-contrast material using at least one previously determined image enhancement technique and/or at least one previously determined technique for analyzing a 2-dimensional set of values provided by an image transform, the previously determined techniques governable by a limited number of automatic setup conditions and/or parameters.

This invention separately provides systems and methods that identify lines having known relative orientations embedded in and/or superimposed on a highly-textured and/or low-contrast material based on at least one consistent number and/or geometric arrangement of such lines.

This invention separately provides systems and methods that identify lines having known relative orientations embedded in and/or superimposed on a highly-textured and/or low-contrast material based on at least one consistent or predetermined spacing between such lines.

This invention separately provides systems and methods that identify lines having known relative orientations embedded in and/or superimposed on a highly-textured and/or low-contrast material based on a predetermined relationship between such lines.

This invention separately provides systems and methods that identify lines having known relative orientations embedded in and/or superimposed on a highly-textured and/or low-contrast material based on a database of relations from previously identified material.

In various exemplary embodiments of the systems and methods according to this invention, a machine vision inspection system includes a motion system, a camera, a light source that emits source light at desired light source settings, a zoom lens or interchangeable lenses that provide magnification, and a control system portion.

In various exemplary embodiments, the vision inspection system is placed into a training or learning mode to create a part program usable to inspect a highly-textured and/or low-contrast surface of a workpiece to identify one or more lines appearing in that surface. In various exemplary embodiments, the operator creates part program instructions to capture an image of a desired portion of the workpiece. In various exemplary embodiments, the operator then creates part program instructions to provide techniques that provide an enhanced image that enhances at least one characteristic of the lines to be identified. In various other exemplary embodiments, a previously determined image enhancement technique is provided to the operator, who selects a limited number of automatic setup conditions and/or parameters that govern the technique. In either case, in various exemplary embodiments, an enhanced image is then generated from the captured image based on the image enhancement technique. In various exemplary embodiments, the enhanced image is displayed to the user for evaluation, or is evaluated automatically. If the enhanced image is not acceptable, another enhanced image is generated using a modification of the technique or a different value for the treatment parameter, until an acceptable enhanced image is obtained. Part program instructions are then created to automatically generate similar enhanced images from other similar workpiece images.

In various exemplary embodiments, once an acceptable enhanced image is obtained, the enhanced image is then transformed. In various exemplary embodiments, the transformed data set is analyzed based on a selected value for an analysis parameter to identify the lines to be identified. In various exemplary embodiments, the analysis parameter is derived from or includes one or more line constraints that correspond to an arrangement or layout that is characteristic of the type of workpiece that includes the lines to be identified. If the results of the analysis are not acceptable, the transformed data set is re-analyzed using a different value for the analysis parameter. Part program instructions are then created to automatically transform such enhanced images into transformed data sets and to automatically analyze the transformed data sets to identify the lines to be identified from other similar workpiece images.

In various exemplary embodiments, certain image enhancement operations according to this invention result in images that can be transformed by a line transform to provide maxima, or in various other exemplary embodiments, minima, that robustly and reliably indicate even noisy or incomplete lines that have low contrast compared to their background.

In various other exemplary embodiments, enhancement operations according to this invention result in images that can be transformed by a line transform to provide global maxima (or minima, if applicable) in the transform space correspond to the lines to be detected. In various exemplary embodiments, such global maxima (or minima, if applicable) can be identified at high speed and with good reliability in comparison to various conventional local maxima (minima) identification and analysis techniques.

In various exemplary embodiments, when the vision inspection system is placed into a training or learning mode to create a part program usable to inspect a highly-textured and/or low-contrast surface of a workpiece, the operator captures an image of a desired portion of the workpiece and then defines or determines one or more line constraints or parameters or the like that characterize the lines to be identified that appear in the captured image. Part program instructions are then created to use these line constraints or parameters or the like, in conjunction with zero, one or more other operations, to speed up and/or enhance the robustness of the operations which analyze the transformed data set to identify lines in the membership images derived from similar workpiece images.

In various other exemplary embodiments, the line constraints or parameters or the like that characterize the lines to be identified that are assumed to appear in an anticipated workpiece inspection image are determined manually, semi-automatically, or automatically from a CAD file of the workpiece, or the like. Part program instructions are then created to use these line constraints or parameters or the like, in conjunction with zero, one or more other operations, to speed up and or enhance the robustness of the operations which analyze the transformed data set to identify lines in the membership images derived from the other similar workpiece images.

These and other features and advantages of this invention are described in, or are apparent from, the following detailed description of various exemplary embodiments of the systems and methods according to this invention.

Various exemplary embodiments of the systems and methods of this invention will be described in detail, with reference to the following figures, wherein:
Fig. 1 is a diagram of a machine vision inspection system;
Fig. 2 is a block diagram showing in greater detail one exemplary embodiment of the control system portion and the vision components portion of the machine vision inspection system of Fig. 1;
Fig. 3 is a flowchart outlining one exemplary embodiment of a method for programming and running a set of inspection operations for a general purpose precision machine vision system;
Fig. 4 is a flowchart outlining in greater detail one exemplary embodiment of a method for programming a set of inspection operations according to this invention;
Fig. 5 shows one exemplary embodiment of a training image obtained from a highly-textured and low-contrast workpiece indicating various exemplary embodiments of image features and various exemplary embodiments of training operations according to this invention;
Fig. 6 is a first exemplary embodiment of a treatment image resulting from a first exemplary embodiment of an image treatment operation according to this invention;
Fig. 7 is a second exemplary embodiment of a treatment image resulting from a second exemplary embodiment of an image treatment operation according to this invention;
Fig. 8 is a first exemplary embodiment of a membership image resulting from operations applied to the treated image of Fig. 7 based on a first exemplary membership parameter according to this invention;
Fig. 9 is a second exemplary embodiment of a membership image resulting from operations applied to the treated image of Fig. 7 based on a second exemplary membership parameter according to this invention;
Fig. 10 shows a plot of a first data set according to this invention obtained by applying one exemplary embodiment of a line transform operation to the treated image shown in Fig. 6;
Fig. 11 shows a plot of a second data set according to this invention obtained by applying the exemplary embodiment of the transform operation to the membership image shown in Fig. 8; and
Fig. 12 shows a set of identified lines obtained by analyzing the line transform data set shown in Fig. 11.

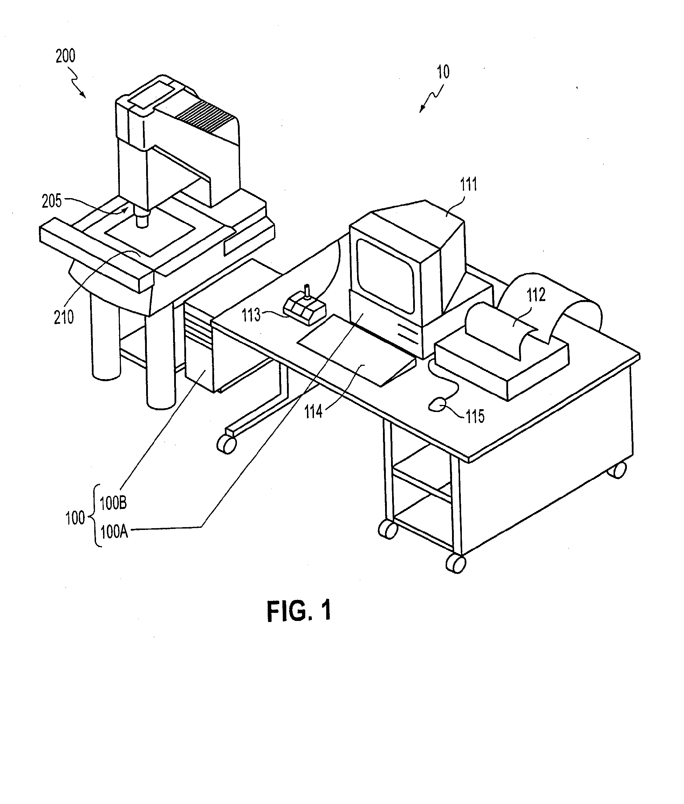

Fig. 1 is a block diagram of one exemplary embodiment of a general purpose programmable machine vision inspection system 10 in accordance with this invention. The machine vision inspection system 10 includes a vision measuring machine 200 that is operably connected to exchange data and control signals with a control system 100. The control system 100 is further operably connected to exchange data and control signals with one or more of a monitor 111, a printer 112, a joystick 113, a keyboard 114, and/or a mouse 115. The vision measuring machine 200 includes a moveable workpiece stage 210 and an optical imaging system 205 which may include a zoom lens or a number of interchangeable lenses. The zoom lens or interchangeable lenses generally provide various magnifications for the images provided by the optical imaging system 205.

The joystick 113 can typically be used to control the movement of the movable workpiece stage 210 in both the X and Y directions, which are generally parallel to the focal planes of the optical imaging system 205, and the movement direction component of the movable optical imaging system 205 in the Z or focus direction. Frequently, the deflection that controls the Z axis is a rotary deflection component of a handle or knob of the joystick 113. The joystick 113 may be provided in a form other than that shown, such as any visual representation or widget on the monitor 111 which is intended to function as a "virtual motion control device" of the machine vision inspection system 10 and is controllable through any computer input device, such as the mouse 115 or the like.

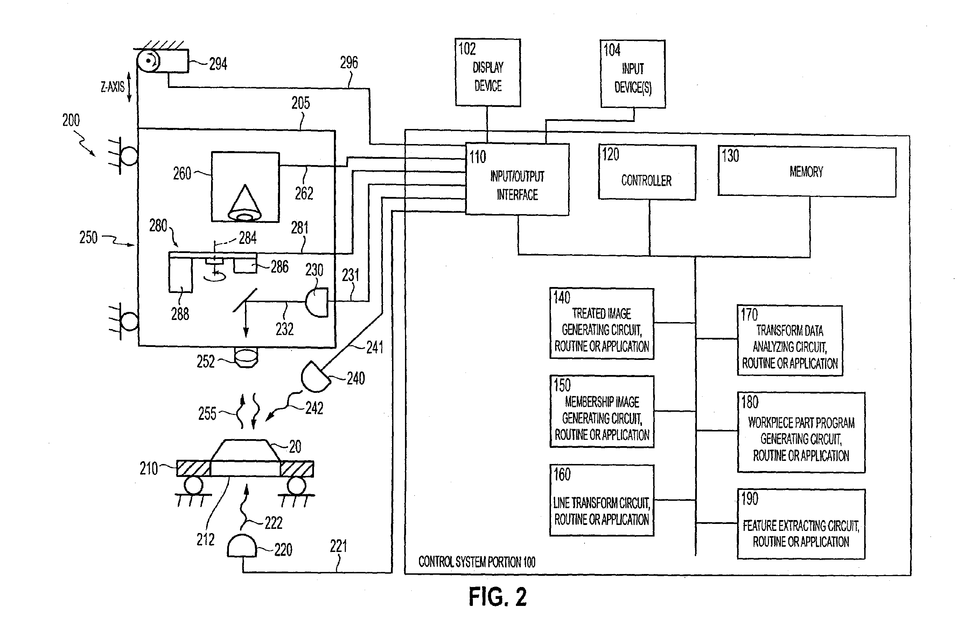

Fig. 2 shows in greater detail one exemplary embodiment of the machine vision inspection system 10, the vision measuring machine or vision components portion 200 and the control system or control system portion 100 of Fig. 1. As shown in Fig. 2, the control system portion 100 controls the vision components portion 200. The vision components portion 200 includes an optical assembly portion 250, light sources 220, 230 and 240, and the workpiece stage 210 having a central transparent portion 212. The workpiece stage 210 is controllably movable along X and Y axes that lie in a plane that is generally parallel to the surface of the stage where a workpiece 20 may be positioned. The optical assembly portion 250 includes a camera system 260, an interchangeable objective lens 252, a turret lens assembly 280, and the coaxial light source 230. The optical assembly portion 250 is controllably movable along a Z axis that is generally orthogonal to the X and Y axes by using a controllable motor 294.

The workpiece 20 to be imaged using the machine vision inspection system 10 is placed on the workpiece stage 210. One or more of the light sources 220, 230 or 240 emits source light 222, 232, or 242, respectively, that is usable to illuminate the workpiece 20. Light emitted by the light sources 220, 230 and/or 240 illuminates the workpiece 20 and is reflected or transmitted as workpiece light 255, which passes through the interchangeable objective lens 252 and one of a lens 286 or a lens 288 of the turret lens assembly 280 and is gathered by the camera system 260. The image of the workpiece 20, captured by the camera system 260, is output on a signal line 262 to the control system portion 100.

The light sources 220, 230, and 240 that are used to illuminate the workpiece 20 can include the stage light 220, the coaxial light 230, and the surface light 240, such as a ring light or a programmable ring light, connected to the control system portion 100 through signal lines or busses 221, 231 and 241, respectively. As a primary optical assembly of the machine vision inspection system 10, the optical assembly portion 250 may include, in addition to the previously discussed components, other lenses, and other optical elements such as apertures, beamsplitters and the like, such as may be needed for providing coaxial illumination, or other desirable machine vision inspection system features. The control system portion 100 rotates the turret lens assembly 280 along axis 284, between at least the first and second turret lens positions, in response to control signals transmitted over a signal line or bus 281.

The distance between the workpiece stage 210 and the optical assembly portion 250 can be adjusted to change the focus of the image of the workpiece 20 captured by the camera system 260. In particular, in various exemplary embodiments of the machine vision inspection system 10, the optical assembly portion 250 is movable in the vertical Z axis direction relative to the workpiece stage 210 using the controllable motor 294 that drives an actuator, a connecting cable, or the like, to move the optical assembly portion 250 along the Z axis. The term Z axis, as used herein, refers to the axis that is intended to be used for focusing the image obtained by the optical assembly portion 250. The controllable motor 294, when used, is connected to the control system portion 100 via a signal line 296.

As shown in Fig. 2, in various exemplary embodiments, the control system portion 100 includes a controller 120, an input/output interface 110, a memory 130, a treated image generating circuit, routine or application 140, a membership image generating circuit, routine or application 150, a line transform circuit, routine or application 160, a transform data analyzing circuit, routine or application 170, a workpiece part program generating circuit, routine or application 180 and, a feature extraction circuit, routine or application 190, which are interconnected by one or more data and/or control busses and/or application programming interfaces 195. It should be appreciated that such circuits, routines or applications encompass hard wired circuits, software circuits, subroutines, objects, operations, application programming interfaces, managers, applications, or any other known or later-developed hardware or software structure.

In various exemplary embodiments, the memory portion 130 may store data and/or "tools" usable to operate the vision system components portion 200 to capture or acquire an image of the workpiece 20 such that the acquired image of the workpiece 20 has desired image characteristics. The memory portion 130 may further store data and/or video tools usable to operate the machine vision inspection system 100 to perform various inspection and measurement operations on the acquired images, either manually or automatically, and to output the results through the input/output interface 130. The memory portion 130 may also contain data defining a graphical user interface operable through the input/output interface 110. Such an embodiment is exemplified by the previously mentioned QUICK VISION™ series of vision inspection machines and the QVPAK™ software, for example.

The signal lines or busses 221, 231 and 241 of the stage light 220, the coaxial light 230, and the surface light 240, respectively, are all connected to the input/output interface 110. A control signal line or bus 281 of the turret lens assembly 280 is also connected to the input/output interface 110. The signal line 262 from the camera system 260 and the signal line 296 from the controllable motor 294 are also connected to the input/output interface 110. In addition to carrying image data, the signal line 262 may carry a signal from the controller 120 that initiates image acquisition.

One or more display devices 102, such as the monitor 111 and the printer 112 and one or more input devices 104, such as the devices 113-115, can also be connected to the input/output interface 110. The display devices 102 and input devices 104 can be used to view, create and/or modify part programs, to view the images captured by the camera system 260 and/or to directly control the vision system components portion 200. In a fully automated system having a predefined workpiece program, the display devices 102 and/or one or more of the input devices 104 may be omitted.

With regard to the feature extracting circuit, routine or application 190, information such as a CAD file representing a workpiece, or a previous image of a substantially identical workpiece, is frequently available in industrial applications of machine vision inspection systems. In the case of a CAD file representation, it should be appreciated that the locations of edges and boundaries in the CAD file representation may be determined manually, in a semi automated fashion, or fully automatically from a CAD representation, by a variety of known CAD file feature extraction methods. In this case, the spatial locations of the corresponding edges and boundaries in a current set of inspection images of a corresponding workpiece may then be determined by a further variety of known manual, semi automated, or automated spatial congruence and/or feature congruence image processing methods. These methods may include, for example, coordinate matching, pattern matching, template matching, and the like. For example, such methods are routinely used to inspect the positions of edges and boundaries on workpieces in a variety of commercially available machine vision inspection systems, such as the QUICK VISION™ series of vision inspection machines and QVPAK™ software discussed above. It should be appreciated, however, that the feature extracting circuit, routine or application 190 can be omitted if an electronic version of the workpiece surface to be inspected does not exist and/or will not be used to identify or isolate lines in the workpiece image.

The control system portion 100 is usable to determine image acquisition settings or parameters and/or acquire an image of the workpiece 20 such that the input image of the workpiece 20 has desired image characteristics in a region of interest that includes a workpiece feature to be inspected. In various exemplary embodiments, when a user uses the machine vision inspection system 10 to create a workpiece image acquisition program for the workpiece 20 according to this invention, the user generates workpiece program instructions either by explicitly coding the instructions automatically, semi automatically, or manually, using a workpiece programming language, or by generating the instructions by moving the machine vision inspection system 100 through an image acquisition training sequence such that the workpiece program instructions capture the training sequence. In particular, these instructions will cause the machine vision inspection system to manipulate the workpiece stage 210 and/or the camera system 260 such that a particular portion of the workpiece 20 is within the field of view of the camera system 260 and will provide a desired magnification, a desired focus state and a desired illumination. This process may be repeated for multiple images in a set of images that are to be captured for inspecting a workpiece.

In various exemplary embodiments, for each desired image, the control system portion 100 will then command the camera system 260 to capture that image of the workpiece 20 and output that captured image to the control system portion 100. In particular, the captured image is input from the camera system 260 , through the input/output interface 110 and stored in the memory 130 under control of the controller 120. The controller 120 may also cause the captured image to be displayed on one of the display devices 102.

The control system portion 100 is further usable to inspect workpiece features in such workpiece inspection images, and to store and/or output the inspection results. In various exemplary embodiments, when a user uses the machine vision inspection system 10 to create at least a portion of a workpiece image inspection program for the workpiece 20 according to this invention, the user generates workpiece program instructions either by explicitly coding the instructions automatically, semi automatically, or manually, using a workpiece programming language, or by generating the instructions by moving and/or controlling the machine vision inspection system 10 through an image inspection training sequence such that the workpiece program instructions capture the training sequence.

In particular, these instructions will cause the machine vision inspection system 10 to perform various inspection operations on the image. Various known machine vision system "tools", which may be stored in the memory portion 130, as previously described, can be used in performing the various foregoing operations. A few examples of video tools usable for various inspection operation are disclosed in U.S. Patent Application Nos. 09/736,187, 09/921,886, and U.S. Patent 6,542,180, each of which is incorporated herein by reference in its entirety. This process may be repeated for multiple images in a set of images used to inspect a workpiece 20.

Specifically, the workpiece part program generating circuit, routine or application 180 is usable to create a part program based on operator input and/or operator manipulation of the vision measuring machine 200 of the machine vision inspection system 10. The workpiece part program generating circuit, routine or application 180 can be used either to create a part program using a part program language and/or can be used to capture manipulations of the vision measuring machine 200 and generate part program instructions based on these manipulations of the vision measuring machine 200 when the machine vision inspection system 10 is placed in a training mode.

The feature extracting circuit routine or application 190, if implemented, is usable to analyze workpiece definition files, such as CAD files and the like, to extract geometric information regarding line-type features from the workpiece definition file. These extracted line-type features can subsequently be used to determine and/or define line-related constraints. These constraints include the spacing between a pair of lines, an angle of intersection between a pair of lines, a spacing between a line and some other feature of the workpiece and/or an angle between a line and some other feature of the workpiece. It should be appreciated that the feature extracting circuit routine or application 190 is optional, and thus can be omitted in various exemplary embodiments according to this invention, and particularly in those embodiments that do not determine or use line-related constraints that are based on geometric information.

The treated image generating circuit, routine or application 140 is usable to create and/or apply an image treatment to an image of a highly-textured and/or low-contrast surface of a workpiece having one or more lines embedded in or superimposed on that surface, to create a treated image. In various exemplary embodiments, an operator creates one or more part program instructions to provide an image treatment technique usable in the treated image generating circuit, routine or application 140. In various other exemplary embodiments, one or more previously determined image treatment techniques are provided to the operator, who selects one or more of the previously determined image treatment techniques to be applied to create the treated image, and a limited number of automatic setup conditions and/or parameters that govern the selected technique(s). In either case, in various exemplary embodiments according to this invention, an image treatment technique is applied to a captured image by the treated image generating circuit, routine or application 140. The treated image generating circuit, routine or application 140 then, under control of the controller 120, either stores the treated image in the memory 130 and/or outputs it directly to the membership image generating circuit, routine or application 150.

In various exemplary embodiments according to this invention where one or more previously determined image treatment techniques are provided to the operator, each such image treatment technique is governed by one or more selectable image treatment parameters such that the image treatment can be customized to provide the most reliable operation and accurate results for a variety of highly-textured and/or low-contrast workpiece surfaces that include one or more embedded and/or superimposed lines. Such selectable image treatment parameters allows relatively unskilled operators to vary the operation of the image treatment technique to create customized part programs that operate robustly, without needing the operator to learn or understand relatively complex image processing operations. In various exemplary embodiments, the selectable image treatment parameters may be determined automatically, semi-automatically, or manually during part programming. In various other exemplary embodiments, a default set of image treatment parameters may be used.

In various exemplary embodiments according to this invention, the treated image is generated by manipulating the pixel data values of the captured image, also called image values herein, to enhance the lines to be detected. For example, in various exemplary embodiments, if the "image values" corresponding to the line tend to be less than the image values of the surrounding highly-textured and/or low-contrast surface, the treated image generating circuit routine or application 140 analyzes a neighborhood around each pixel of the captured image and identifies the lowest image value in that neighborhood around that pixel. Then, to generate the treated image, each respective pixel is given that identified lowest image value from its respective neighborhood. This technique corresponds to an image processing operation sometimes known as "expansion" for the pixels having image values corresponding to the line.

In the treated image, this "expansion" operation generally enhances at least one characteristic of the lines to be detected. For example, this expansion operation increases the apparent width and continuity along the line direction of the pixels representing the line, and may enhance the contrast of the pixels representing the line in comparison to the highly-textured and/or low-contrast surface background. In various exemplary embodiments, this image treatment technique that is implemented is a predetermined image treatment technique. In various other exemplary embodiments, the image treatment technique can be selected by the operator. Various modifications, extensions or alternatives to this image treatment technique will be apparent to one of ordinary skill in the art based on the methods disclosed herein.

In various exemplary embodiments, when such a manipulation is used as a the image treatment technique, the size and/or shape of the respective neighborhood surrounding each respective pixel may be governed by one or more size parameters, such as, for example, a radius parameter for the neighborhood. It should be appreciated that, for a highly-textured surface background, higher spatial frequencies of that texture will tend to be suppressed by relatively small radius parameters. Additional lower spatial frequencies will tend to be suppressed as the radius parameter is relatively increased. Thus, as the radius parameter increases, the apparent surface background in the treated image will tend to appear more uniform and to exhibit an image intensity that is lower than the characteristic intensity present in the original highly-textured surface background. This tends to blur or eliminate various textures and potential linear features in the apparent surface background in the treated image, which increases the reliability of subsequent operations for finding the lines that are embedded in, and/or superimposed on, the highly-textured and/or low-contrast material, as described in greater detail below.

It should also be appreciated that, in the treated image, these same operations will tend to generally increase the apparent width and similarly increase the uniformity of the lines that are embedded in, and/or superimposed on, the highly-textured and/or low-contrast material. Furthermore, the lines will tend to exhibit an image intensity that is a lower characteristic intensity than that present in the original lines. For workpieces that are inspectable according to the principles of this invention, this lower characteristic intensity that is present in the original lines will be consistently different from the lower characteristic intensity that is present in the surface background, allowing the line to be more-readily distinguished from the background in the treated image.

However, it should be appreciated that, if the radius parameter for the neighborhood is increased too much, the foregoing operations will tend to increase the apparent width of the lines embedded in, and/or superimposed on, the highly-textured and/or low-contrast material in the treated image so much that the lines become merged and/or ill-defined. Thus, the radius parameter should be chosen with due consideration to these various tradeoffs. These considerations are discussed in greater detail below.

Of course, it should be appreciated that, if the line is defined by image values that are greater than the background values, either because the line is darker and higher values define darker image areas or because the line is lighter and higher values define lighter image portions, the treated image generating circuit routine or application 140 can identify the maximum image value, rather than the minimum image value, in the respective neighborhood around each respective pixel of the captured image.

It should be appreciated that, as previously indicated, in various exemplary embodiments according to this invention, the foregoing image treatment operations or the like can be independently developed by sufficiently skilled operators. However, in various other exemplary embodiments, a set of image treatment operations, for example, the foregoing image treatment operations or the like, may be provided for an operator of machine vision system as a previously determined image treatment technique. In such embodiments, the image treatment technique is governed by one or more selectable image treatment parameters such that the image treatment can be customized to provide the most reliable operation and accurate results for a variety of highly-textured and/or low-contrast workpiece surfaces that include one or more embedded and/or superimposed lines. Such selectable image treatment parameters allows relatively unskilled operators to vary the operation of the image treatment technique to create customized part programs that operate robustly, without needing the operator to learn or understand relatively complex image processing operations.

In various exemplary embodiments, the membership image generating circuit, routine or application 150, under control of the controller 120, inputs the treated image, either from the memory 130 or directly from the treated image generating circuit, routine or application 140. In various exemplary embodiments, an operator creates part program instructions to provide a membership image technique usable in the treated image generating circuit, routine or application 150. In various other exemplary embodiments, one or more previously determined membership image techniques are provided to the operator, who selects a limited number of automatic setup conditions and/or parameters that govern the technique. In either case, in various exemplary embodiments according to this invention, a membership image technique is applied to a treated image by the membership image generating circuit, routine or application 150 to generate a membership image.

Once the membership image has been generated by the membership image generating circuit, routine or application 150, the membership image generating circuit, routine or application 150, under control of the controller 120, either outputs the membership image directly to the line transform circuit, routine or application 160 or stores the membership image in the memory 130.

In various exemplary embodiments according to this invention the membership image generating circuit, routine or application 150 applies the membership image technique to the treated image to generate a membership image that distinguishes probable line pixels from probable background surface pixels. In various exemplary embodiments, a thresholding technique is applied such that a binary-valued membership image is generated, where one of the binary values represents membership of a pixel in a line in the image and the other binary value represents that that pixel is not a member of any line in the image. Thus, in such embodiments, a single membership parameter, for example, an image value threshold, can be used to define a point in the range of image values that divides the range between image values that indicate a pixel is likely to be a member of a line and image values that indicate that pixel is likely to represent the highly-textured and/or low-contrast background of the surface that the lines are embedded in and/or superimposed on.

It should be appreciated that other, more general, thresholding membership image techniques can be applied as alternatives. In any case, such thresholding techniques generally substitute artificial image values for the various image pixels, depending on whether or not they have image values above a chosen threshold. The artificial images values are generally chosen to strongly exaggerate the contrast between the pixels representing the lines to be identified in the image and the pixels representing the highly-textured and/or low-contrast background of the surface. However, in general, the artificial image values need not be restricted to strictly binary values or the most extreme image values. In any case, such techniques tend to further enhance a contrast characteristic of the pixels representing the lines to be detected, in comparison to the pixels representing the highly-textured and/or low-contrast surface background.

In various exemplary embodiments according to this invention where one or more previously determined membership image techniques are provided to the operator, the image treatment technique is governed by one or more selectable membership image parameters such that the membership image treatment can be customized to provide the most reliable operation and accurate results for a variety of highly-textured and/or low-contrast workpiece surfaces that include one or more embedded and/or superimposed lines. In various exemplary embodiments, the membership image parameters include the image value threshold, which is selectable or modifiable by relatively unskilled operators as a ways of customizing the effect of the membership image generating techniques for various specific types of workpieces or workpiece images. Various modifications, extensions or alternatives to these membership image generating techniques will be apparent to one of ordinary skill in the art based on the methods disclosed herein.

The line transform circuit, routine or application 160, under control of the controller 120, either inputs the membership image from the memory 130 or directly from the membership image generating circuit, routine or application 150. The line transform circuit, routine or application 160 then applies an image transform to the membership image to generate a transform data set that can be analyzed to identify line parameters, such as the angle of the lines relative to a reference axis of the image and/or the distance from the line to a reference origin of the image.

The foregoing description assumes that, in various exemplary embodiments, it is useful to be able to display the treated image for operator evaluation or analysis. Thus, the operations for determining the treated image and for determining the membership image are described separately. However, more generally, it should be appreciated that either the treated image operations or the membership image, or both may be considered examples of a more general case of an enhanced image process. Thus, it should be appreciated that, in various exemplary embodiments, the membership image generating circuit, routine or application 150, and the treated image generating circuit, routine or application 140 may be combined and indistinguishable as portions of a more general enhanced image generating circuit, routine or application. Alternatively, in various exemplary embodiments, a more general enhanced image generating circuit, routine or application may omit either the membership image generating circuit, routine or application 150, or the treated image generating circuit, routine or application 140, and still provide an enhanced image that is usable according to this invention. In various exemplary embodiments, the more general enhanced image generating circuit, routine or application may display an intermediate image corresponding to the operations of the treated image generating circuit, routine or application 140, or only a final enhanced image.

In yet other exemplary embodiments, the treated image may be stored or displayable, while the membership image is not stored or displayable, and the various circuits, routines or applications used for line membership determination may be included with and indistinguishable from the various circuits, routines or applications to subsequently used to determine the lines, such as those line determining circuits, routines or applications outlined above and described in greater detail below. In any case, it should be appreciated that the previously described treatment and membership image techniques together constitute one exemplary embodiment of the more general step of processing the workpiece image to enhance probable line pixels in comparison to probable background pixels, prior to performing the line transform technique (s) included in the line determining circuits, routines or applications.

In various exemplary embodiments, the line transform circuit, routine or application 160 applies the Radon transform, for example, as disclosed in "The Radon Transform - Theory and Implementation", PhD Thesis by Peter Toft, IMM, DTU, 1996, which is incorporated herein by reference in its entirety. In various other exemplary embodiments, the line transform circuit, routine or application 160 applies the Hough transform, for example as disclosed in the Hough Transform section included in the book Machine Vision, by Ramesh Jain, et al., McGraw Hill, 1995, incorporated herein by reference in its entirety.

The Radon transform and the Hough transform are conventionally referred to as line transforms, or straight-line transforms. For such transforms, lines existing in the original image may be detected as particularly high value (or particularly low value) accumulator cells, as described in greater detail below. In particular, the two parameters characterizing the location and orientation of detected lines are specified by the 2 coordinates of corresponding accumulator cells in the transform space. Line detection in the image is thus transformed into detecting local maxima (or minima) in the accumulator 2-dimensional transform space.

In particular, the Radon transform converts the image value of a respective pixel in the membership image, based on its image value and its position in the membership image, into a respective curved line having a characteristic respective line value that passes through a number of elements or bins in a two-dimensional array that defines the data space of the transform. In particular, each element or bin of the two-dimensional array stores an accumulated value that represents the accumulated line values of all the respective lines that pass through that element or bin, after all desired respective pixels of the membership image have been transformed. Thus, in general, such line transforms, and the Radon transform in particular, nominally generate a 2-dimensional set of values that include local extrema, that is, local maxima and local minima, that nominally correspond to probable individual lines.

In particular, in the Radon transform, one axis in the transform space defines the spacing of a straight line from an origin at a reference location within the original captured image, while the other axis in the transform defines the angle of a straight line relative to a reference line or axis. In the Radon transform, straight lines to be detected in the input image, which will generally consist of pixels having similar image values and which are generally arranged along their respective straight lines in the X-Y plane of the input image, will generate curved lines in the Radon transform space that, ideally, all pass through a single bin or element, or, more realistically, through one of a relatively small localized set of adjacent bins or elements. Thus, if a straight line to be detected in the original image tends to include pixels having relatively higher image values than the surrounding textured surface background, the bin or element (or bins/elements) corresponding to that straight line will tend to have a much higher accumulated value than the typical bins or elements corresponding to the transformed textured surface background.

Similarly, if a straight line to be detected in the original image tends to include pixels having relatively lower image values than the surrounding textured surface background, the bin or element (or bins/elements) corresponding to that straight line will tend to have a much lower accumulated value than the typical bins or elements corresponding to the transformed textured surface background.

With reference to the desired lines to be identified, the local extrema can be said to include "proper-polarity" local extrema having a polarity corresponding to lines to be identified, as well as "opposite-polarity" local extrema. That is, when the lines to be detected in the original image tend to include pixels having relatively lower image values than the surrounding textured surface background, the "proper-polarity" local extrema corresponding to such lines to be identified are minima. Then the lines to be detected in the original image tend to include pixels having relatively higher image values than the surrounding textured surface background, the "proper-polarity" local extrema corresponding to such lines to be identified are maxima.

As indicated above, each bin or element (or bins/elements) has an angle coordinate and a spacing coordinate associated with it. In particular, the two dimensional coordinates of the local extrema are usable to define the locations of the corresponding individual lines in the original image. In various exemplary embodiments, the reference origin and angle reference axis from the transform space are chosen such that these angle and spacing values represent the angle of the line that appears in the input image relative to the axes of the input image and the axis intercept of that line from an origin location in the input image.

Accordingly, the line transform circuit, routine or application 160 selects each pixel of the membership image in turn and applies the particular line transform, such as the Radon or Hough transform, to that pixel and accumulates values in each bin or element in the transform space through which the corresponding curved line, generated by the particular transform for that pixel, passes. Once the line transform circuit, routine or application 160 has selected all of the desired pixels in the membership image, the line transform circuit, routine or application 160, under control of the controller 120, outputs the transform data set either to the memory 130 or directly to the transform data analyzing circuit, routine or application 170.

The transform data analyzing circuit, routine or application 170, under control of the controller 120, inputs the transform data set either from the memory 130 or directly from the line transform circuit, routine or application 160. The transform data analyzing circuit, routine or application 170 analyzes the transform data set to identify proper-polarity local extrema, in the transform data space that correspond to the lines to be detected in the original image. It should be appreciated that a noisy or only approximately straight line will not be transformed into a point in the transform space, but rather will result in a cluster of points that together comprise the operable local extrema, with the coordinates of the cluster center of gravity to be considered to correspond to the straight line representation.

Such proper-polarity local extrema, that is local maxima, or alternatively, local minima, may be identified by any appropriate known or later-developed method. For example, in various exemplary embodiments, those array elements or bins storing accumulated values that are significantly higher, or alternatively, lower, than a background value within the transform data set are considered accumulated value maxima (minima) that are to be considered candidates for the lines to be detected. In particular, in various exemplary embodiments, the data transform analyzing circuit, routine or application 170, based on a determined threshold value, identifies those array elements or bins that have an accumulated value that is greater (lesser) than a background accumulated value count by an amount that is defined by the determined threshold value.

For example, in various exemplary embodiments, once the range between the minimum accumulated value and the maximum accumulated value is determined for the transform space, then the transform data analyzing circuit, routine or application 170 identifies maxima (minima) having an accumulated value that is greater (lesser) than the threshold value percent of the determined range.

In general, insuring that a local maxima (minima) in such a line transform data space corresponds to a desired type of line in an image is a non-trivial problem. However, as described in greater detail below, certain treated image operations and/or membership image operations according to this invention result in images that can be transformed to provide local maxima (minima) that robustly and reliably indicate even noisy or incomplete lines that have low contrast compared to their background.

In particular, in various exemplary embodiments according to this invention, the various image enhancement operations according to this invention, for example, the treated image operations and/or membership image operations described herein, are determined such that they result in images that can be transformed such that the proper-polarity global extrema, that is, the one or more most extreme-valued maxima (minima) in the entire transform space, tend to correspond to the lines to be detected. It should be appreciated that such proper-polarity global extrema can be identified at high speed and with good reliability in comparison to various local maxima (minima) identification and analysis methods.

Furthermore, it should be appreciated that, when straight lines having known relative orientations to each other are to be detected, certain other methods according to this invention provide for particularly robust and fast determination of the particular local extrema that correspond particularly to the lines to be detected, despite the fact that the lines to be detected are embedded on, formed on or in or superimposed on a highly-textured and/or low-contrast background that may include features such as linear weave features and the like that give rise to extraneous local maxima (minima) in the transform data space that may have values more extreme than at least some of the local extrema corresponding to the lines to be detected.

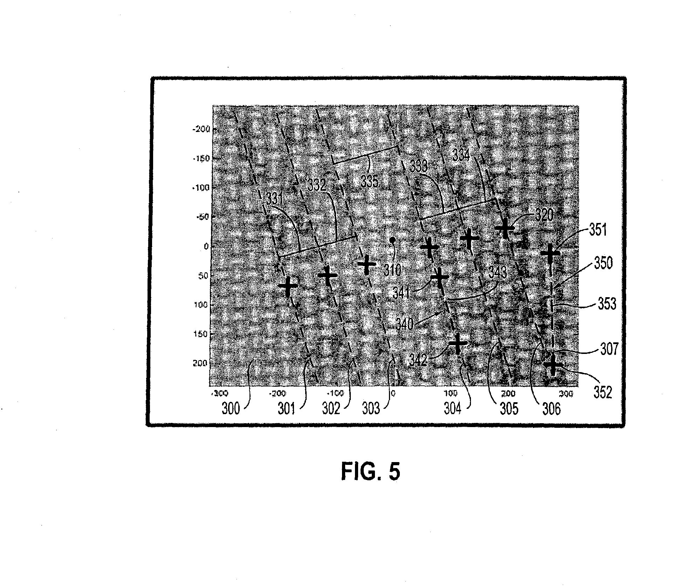

In particular, as described below with reference to Fig. 5, for workpieces inspectable according to the principle of this invention, it is typical that the number of lines to be detected in the inspection image of the workpiece can be known or determined, that the mutual spacing between the lines to be detected in the inspection image can be known or determined within an approximate tolerance, and that the mutual angle between the lines to be detected in the inspection image can be known or determined within an approximate tolerance. In various exemplary embodiments, the angle between the lines to be detected in the inspection image and a reference line (or other feature) associated with a weave pattern, or the like, in the surface background of the workpiece may also be known or determined within an approximate tolerance.

Accordingly, in various exemplary embodiments of the systems and methods according to this invention, once the candidate array elements or bins, that is, the candidate local extrema that having accumulated value counts that are greater than (less than) the threshold are determined, the transform data analyzing circuit, routine or application 170 can analyze the angle and spacing values of the candidate array elements or bins to determine which candidate array elements or bins (candidate local extrema) , which nominally should correspond to lines to be detected in the original membership image, correspond to one or more of the known or determined line constraints, such as the numbers of lines, their mutual spacing, and/or their angles relative to each other and/or relative to a reference line in the background surface. The selection of the candidate array elements or bins (the candidate local extrema) that are finally taken to actually correspond to the desired lines to be identified or detected is then restricted to those among the candidate array elements or bins (candidate local extrema) that correspond to one or more line constraints.

It should be appreciated that, when straight line transforms, such as the Radon or Hough transform, are used according to the principles of this invention, because the coordinate axes of such transform spaces correspond to the known or determined spacings and angles, it is particularly fast and simple to determine whether the candidate array elements or bins satisfy the known or determined line constraints. For example, in one exemplary embodiment, each of a specific number lines to be detected are known or determined to be mutually parallel in the original image. Thus, each of the candidate array elements or bins that actually correspond to these lines to be detected must be part of a group of candidate array elements or bins that have the same coordinate value along the "angle" coordinate axis in the transform space, within the approximate tolerance range, and that has at least as many maxima (minima) in the group as the specific number lines to be detected. Any candidate array elements or bins that do not satisfy this condition can thus be easily and quickly eliminated.

If there is more that one group of candidate array elements or bins that satisfy this condition, or if a group has more members than the specific number lines to be detected, then the known or determined mutual spacing between the lines can be used to further reduce the candidate array elements or bins down to only those corresponding to the actual lines to be detected. For example, at a particular angle coordinate in the transform space, each of the group of candidate array elements or bins that actually corresponds to a line to be detected must be spaced apart from other members of the group along the "spacing" coordinate axis by spacing differences that correspond to the known or determined mutual spacings between the various lines to be detected, within the approximate tolerance range. Any candidate array elements or bins that do not satisfy this condition can be eliminated. Typically, following these screening steps, the remaining candidate array elements or bins appropriately correspond to the actual lines to be detected in the original image.

In a further exemplary embodiment related to such mutually parallel lines to be identified, the various image enhancement operations according to this invention tend to insure that the lines to be identified result in proper-polarity local extrema that are among the relatively most extreme-valued local extrema in the transformed data. In this exemplary embodiment, an operation is performed that sums each "column" of set of elements or bins that have the same coordinate value along the "angle" coordinate axis in the transform space. Thus, corresponding to the mutually parallel lines to be determined, the corresponding group of local extrema that have the same coordinate value along the "angle" coordinate axis in the transform space will sum to create a proper-polarity "1-dimensional global extrema along the angle coordinate axis.

Thus a "selection" region for the local extrema that actually correspond to the lines to be determined can be restricted to that region of the 2-dimensional transform space that lies in the vicinity of the angle coordinate corresponding to the proper-polarity 1-dimensional global extrema along the angle coordinate axis. In particular, in some such exemplary embodiments, the most extreme-valued local extrema within this restricted selection region are taken to correspond to the lines to be detected. In other such exemplary embodiments, the ones of the most extreme-valued local extrema within this restricted selection region that also correspond to a line spacing constraint determined for the mutually parallel lines are taken to correspond to the lines to be detected.

It should be appreciated that this is just one example of how a determined line constraint or corresponding transform analysis parameter can be applied to provide a restricted selection region for the local extrema that actually correspond to the lines to be determined. Methods for restricting a selection region based on other types line constraints or corresponding transform analysis parameters will be apparent to one of ordinary skill in the art based on the teaching included herein.

It should be appreciated that, although the exemplary case of robustly detecting parallel lines has been described, similar principles can be applied to robustly screen candidate array elements or bins corresponding to mutually-oriented non-parallel lines to be detected, and the like. More generally, any known or determined mutual spacings, mutual angles and/or angles to other background reference features that generate detectable maxima (minima) in the transform space array elements or bins can be used by the transform data analyzing circuit, routine or application 170 to screen and/or eliminate improper candidate array elements or bins, to more robustly identify the actual lines to be detected.

It should be appreciated that, because such screening is particularly simple, fast, and reliable, in various exemplary embodiment that employ such screening, any thresholds or other parameters or operations that effectively limit the number of candidate array elements or bins can be set or arranged to insure that at least all the transform space maxima (minima) corresponding to the lines to be detected are retained as candidates. That is, such thresholds or operations can be set conservatively, such that transform space maxima (minima) corresponding to extraneous features of the image may be included as candidates.

Such a conservative approach poses little or no risk of false line detection, because the previously described candidate screening, according to the methods of this invention is particularly simple, fast, and reliable. Thus, various exemplary embodiments of the systems and methods according to this invention are particularly robust against false detection while also providing robustly complete detection of all actual lines to be detected. In addition, as previously mentioned, these various exemplary embodiments of the systems and methods can be implemented in a particularly clear and simple fashion and operated at very high speeds.

In various exemplary embodiments, when the remaining candidate array elements or bins (i.e., the proper-polarity local extrema) match the known or determined line constraints, the transform data analyzing circuit 170 outputs a signal indicating that the lines to detected in the original image have been identified and/or located. In various exemplary embodiments, the transform data analyzing circuit 170 also outputs a signal or information indicating whether the lines to detected in the original workpiece passes a particular set of inspection criteria based on their determined locations. Otherwise, the transform data analyzing circuit, routine or application 170 outputs an error signal or a signal indicating that this workpiece does not include lines meeting the known or determined line constraints and should be rejected and/or further analyzed.

It should be appreciated that, in various other embodiments, certain of the steps or operations described above related to the line transform operations can be eliminated or replaced, such that the line transform operations can be performed in an even simpler and faster manner. For example, if each workpiece that includes lines to be detected that have known relative orientations is fixtured or arranged relative to the image frame such that the angles of the lines to be detected are always constrained to be within a predetermined angular tolerance range relative to the image frame, then transform operations only need to be performed for those elements or bins in the transform space that are within the corresponding angular tolerance range in the transform space. Of course, this also automatically eliminates irrelevant maxima (minima) in that may occur in other parts of the transform space, reducing or potentially eliminating the need to screen the candidate array elements or bins that are not in the appropriate portion of the transform.

Furthermore, it should be appreciated that, if each workpiece that includes lines to be detected that have known relative orientations is fixtured or arranged relative to the image frame such that the lines to be detected are always constrained to be within a predetermined spacing tolerance range relative to the image frame, or a reference spacing origin point within the image, then transform operations only need to be performed for those elements or bins in the transform space that are within the corresponding spacing tolerance range in the transform space. This further reduces the time required for transform operations and further automatically eliminates irrelevant maxima (minima) in that may occur in other parts of the transform space, further reducing or potentially eliminating the need to more extensively screen the candidate array elements or bins.

It should be appreciated that, in the foregoing discussions, application of the known or determined line constraints, or their corresponding transform analysis parameters, to screen or restrict the candidate array elements, bins or local extrema, have generally been described as taking place in the transform data domain or the 2-dimensional transform space. If the type of transform and/or the transform space dimension types are properly chosen, this will generally result in the most efficient implementation. However, the methods according to this invention are not so limited. In various exemplary embodiments, a set of candidate local extrema may be converted to a set of corresponding line representations in another parameter space, if the screening or restriction related to the line constraints may be more easily applied in that other parameter space. For example, a set of candidate local extrema may simply be converted to a set of line locations corresponding to the original workpiece image. Then, the restrictions are applied to those line locations, if desired. Thus, the foregoing screening or restriction operations corresponding to the various line constraints are exemplary only, and not limiting.

It should be appreciated that, in various exemplary embodiments, the treated image generating circuit, routine or application 140, the membership image generating circuit, routine or application 150, and the transform data analyzing circuit, routine or application 170 operate on the original image, the treated image, the membership image and the transformed data set, respectively, using various parameters that are highly workpiece-type specific. That is, for a given type of workpiece, the line constraints and the specific image characteristics tend to be unique. Thus, to effectively, reliably and robustly inspect any workpiece using the machine vision inspection system 10 as described above, these various parameters must be determined in correspondence to a representative image of that type of workpiece and incorporated into the corresponding part program used by the machine vision inspection system 10 for inspecting that type of workpiece.

In particular, the treated image generating circuit, routine or application 140, the membership image generating circuit, routine or application 150, the line transform circuit, routine or application 160, the transform data analyzing circuit, routine or application 170 and the workpiece part program generating circuit, routine or application 180 are used during a training mode or the like to determine, define and/or adjust the various parameters to be used by the treated image generating circuit, routine or application 140, the membership image generating circuit, routine or application 150, and the transform data analyzing circuit, routine or application 170 based on the particular workpiece to be inspected and the original input image captured by the vision measuring machine 200 of that workpiece.

In general, in operations to determine, define and/or adjust the various parameters, the operator of the machine vision inspection system 10, after adjusting the machine vision system 200 to focus on a desired portion of the workpiece that includes the lines to be detected and setting the lighting systems appropriately, captures an image of that portion of the workpiece that includes the lines to be detected.

Then, in those embodiments that employ various line constraints or features to screen candidate array elements or bins, as outlined above, the operator defines one or more line constraints, either by operating the workpiece definition feature extracting circuit, routine or application 190 to analyze a workpiece definition file or by using various image processing and/or inspection tools to characterize the prototypical lines to be detected that appear in the captured image, as outlined below with reference to Fig. 5. In addition, similar operations may possibly be used to define one or more features in the background portion of the captured image that will act as reference lines or points for determining one or more of the line constraints in relation to such features.

That is, the operator can define the line constraints such that only relative or intra-line constraints are defined. Additionally, or instead of, these intra-line constraints, the operator can also define constraints, i.e., extra-line constraints, defining relationships between the identified lines and other features of the workpiece that appear in the captured image. The operator can then activate the workpiece part program generating circuit, routine or application 180 to generate part program instructions that record and/or utilize these intra-line and/or extra-line constraints.

In general, the operator then operates the treated image generating circuit, routine or application 140 to generate a treated image from the original captured image. In various exemplary embodiments, as outlined above, a default set or sequence of image treatment operations according to the principles of this invention may be provided in the memory portion 130, such that a relatively unskilled operator may operate that default sequence of image treatment operations by selecting and/or adjusting one or more treatment parameters that effectively customize those treatment operations for a particular workpiece.

In such a case, the operator initially invokes the treated image generating circuit, routine or application using a starting or initial value for the treatment parameter. Once the treated image is generated using this initial or starting value for the treatment parameter, the operator can display the resulting treated image and determine if the current value for the treatment parameter should be adjusted. As indicated above, in one exemplary embodiment, the treatment parameter defines the size of the neighborhood around the current pixel of interest that is analyzed to determine the minimum (or maximum) image value that should be used in place of the image value of the current pixel of interest in the treated image. Also, as indicated above, it should be appreciated that, in various exemplary embodiments, such a treatment parameter should be chosen such that the width and/or the continuity of the line(s) to be detected is adequately enhanced. In addition, in various exemplary embodiments, the treatment parameter can be chosen to suppress high spatial frequency linear features in the background surface of the workpiece.

On the other hand, it should be appreciated that the treatment parameter should not be so large that two adjacent lines merge into one another in the treated image, such that it is no longer possible to separately distinguish the two lines from each other. It should also be appreciated that enlarging the lines in the treated image is similar to blurring the lines, and that this may decrease the resolution, repeatability and/or accuracy that can be achieved for locating a line. In practice, the treatment parameter value(s) should be chosen to provide a desired balance between these various factors based on the particular inspections needs or a particular workpiece.

It should be appreciated that, in various other exemplary embodiments, rather than having the operator display the generated treated image and decide whether to adjust the treatment parameter value(s), the treatment parameter value(s) can be automatically determined by the workpiece part program generating circuit, routine or application 180 based on the line spacing between various adjacent lines as determined by the workpiece definition file feature extraction circuit, routine or application 190, or by analyzing a prototypical image of the lines to be detected. In general, the treatment parameter will be typically constrained based on the closest spacing between any two adjacent lines to be detected.

In one exemplary embodiment, the inventor has determined that, when the previously described neighborhood radius is used as a treatment parameter value, good results are obtained when the neighborhood radius is approximately 1/10 to 1/13 of the closest spacing between two adjacent lines to be detected. However, this range is exemplary only, and not limiting, due to the overall robustness of the methods according to this invention, and due to the various previously mentioned tradeoffs that may be appropriate to a particular type of workpiece inspection. Once the appropriate treatment parameter value(s) is (are) determined, the workpiece part program generating circuit, routine or application 180 is invoked to embed this value into the part program for this workpiece.

Next, the operator activates the membership image generating circuit, routine or application 150 to convert the appropriate treatment image into a membership image that indicates pixels that are likely to correspond to the lines to be detected. In particular, in various exemplary embodiments, as described above, the membership image generating circuit, routine or application 150 applies an image value threshold to the treatment image to generate the binary membership image. Similarly to the treated image, in various exemplary embodiments, one or more default membership determining operations according to the principles of this invention may be provided in the memory portion 130, such that a relatively unskilled operator may operate one or more of the default membership determining operations by selecting and/or adjusting one or more membership parameters that effectively customize the default membership determining operations for a particular workpiece. In such a case, the operator initially invokes the membership image generating circuit, routine or application 150 using a starting or initial value for the membership parameter. Once the membership image using this initial or starting value for the treatment parameter is generated, the operator can display the resulting treated image and determine if the current value for the treatment parameter should be adjusted.

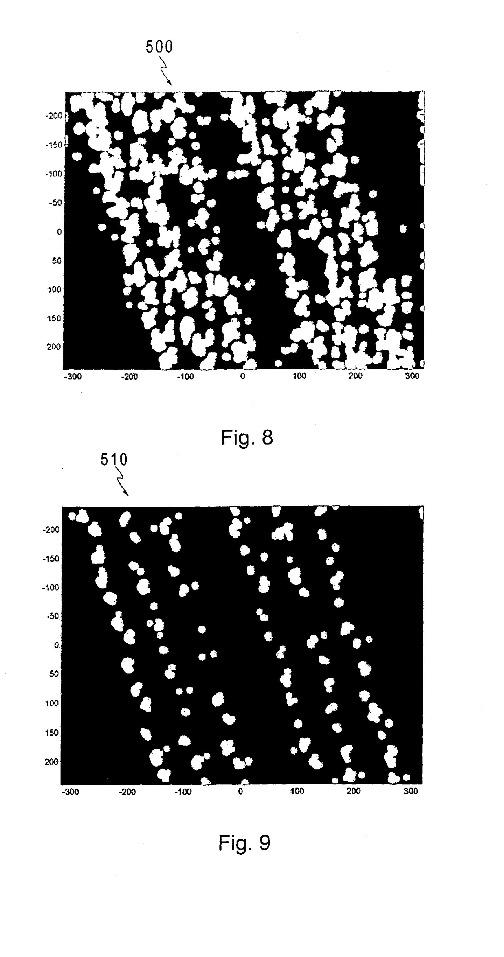

For example, in various exemplary embodiments, the membership parameter is an image value threshold, as described above. In such exemplary embodiments, if the current value of the membership parameter is too close to one image value extreme, such that an insufficient number of pixels are identified in the membership image as being members of the lines, that is, if the "lines" in the membership image appear too "sparse", the membership parameter can be adjusted away from that extreme. In contrast, if the value of the membership parameter is too close to the other image value extreme, such that so many pixels are identified as members of the "lines" in the membership that it becomes impossible to distinguish the lines from each other and/or from the background, that is, if the "lines" in the membership image appear too "noisy", the membership parameter can be adjusted away from that extreme. Such considerations are discussed in greater detail below, and, in particular, with reference to Figs. 8 and 9.

It should be appreciated that this analysis can be performed iteratively by the operator or can be performed automatically by the workpiece part program generating circuit, routine or application 180. Once the appropriate value for the membership parameter is determined, the workpiece part program generating circuit, routine or application 180 is activated to embed that value into one or more instructions of the part program for this workpiece.

Due to the efficacy of the various operations described above for screening candidate array elements or bins in the transform space in various exemplary embodiments according to this invention, it should be appreciated that, in various exemplary embodiments, that any membership threshold values or the like that effectively limit the pixels indicated in the membership image as corresponding to the lines to be detected can be set conservatively. That is, the membership parameter(s) may be set such that at least a significant majority of the pixels that actually correspond to the lines are indicated as line members. This is true even if this results in some or several pixels corresponding to extraneous features of the image also being indicated as line members.

Such a conservative approach poses little or no risk of false line detection, because the previously described candidate screening in the transform space according to the systems and methods of this invention is particularly simple, fast, and reliable. Thus, the systems and methods of this invention are particular robust against false detection while also providing robustly complete detection of all actual lines to be detected, in comparison to prior art methods of detecting lines against highly-textured and/or low-contrast backgrounds. In addition, as previously mentioned, these systems and methods can be implemented in a particularly clear and simple fashion and operated at very high speeds.

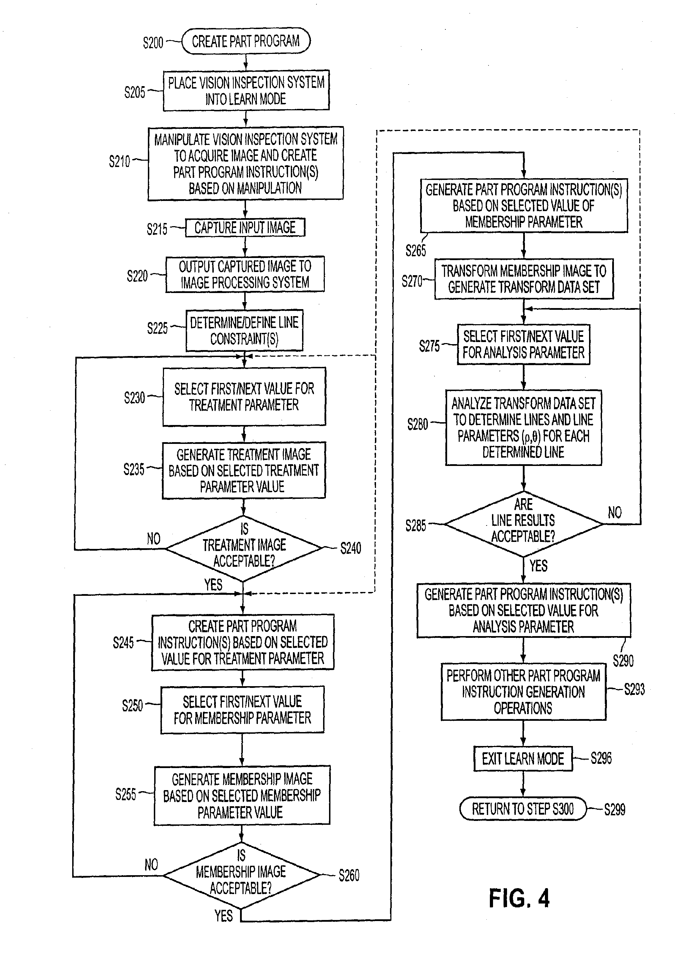

In general, the operator, in sequence, next invokes the line transform circuit, routine or application 160 to convert the membership image into the transform data set and the transform data analyzing circuit, routine or application 170 to analyze the resulting transform data set, to detect the locations of the lines to be detected. As described below with reference to Figs. 4, 10 and 11, in various exemplary embodiments, the transform data analyzing circuit, routine or application 170 initially analyzes the transform data set based on an initial or start value for the transform analysis parameter(s). Then, based on how closely the resulting line detection results match the characteristics of the lines to be detected, the operator iteratively adjusts the transform analysis parameter(s) and re-invokes the transform data analyzing circuit, routine or application 170 until the transform data analyzing circuit, routine or application 170 accurately identifies only those array elements or bins that actually correspond to the desired lines to be identified. Of course, it should be appreciated that this analysis can be performed iteratively by the operator or can be performed automatically by the transform data analyzing circuit, routine or application 170.

It should be appreciated that, if the value(s) of the transform analysis parameter(s) cannot be adjusted such that only the desired lines are identified by the transform data analyzing circuit, routine or application 170, the operator can adjust the values for the membership parameter(s) and/or the treatment parameter(s), as outlined above with respect to the membership image generating circuit, routine or application 150 and/or the treated image generating circuit, routine or application 140. In this case, the operator would again invoke the line transform circuit, routine or application 160 and the transform data analyzing circuit, routine or application 170 as outlined above to again adjust the value of the transform analysis parameter(s) in view of the new treatment and/or membership images. Once the appropriate value(s) for the transform analysis parameter(s) is (are) determined, the workpiece part program generating circuit, routine or application 180 is activated to generate a part program instruction for the determined value(s) for the transform analysis parameter(s).

In various exemplary embodiments, for each image, the control system portion 100 will output the results of one or more of the inspection operations to the input/output interface 110 for outputting the results to various ones of the display devices 102, which may include the monitor 111, printers, and the like. The control system portion 100 may also store the results of one or more of the inspection operations in the memory 130.

Various known image processing and/or feature analysis or inspection tools may be used may be used for assistance in performing the various inspection operations. Such tools may include, for example, shape or pattern matching tools, edge and/or boundary detection tools, circle and dimension measuring tools, and the like. One example of the use of such video tools in a precision machine vision inspection system according to this invention is described in greater detail with reference to Fig. 5.

In various exemplary embodiments of the systems and methods according to this invention, the image inspection operations includes operations that use line parameter transforms and line constraints to locate and inspect mutually-oriented or parallel lines. Once the image inspection operations are created and stored, the created image inspection operations can be recalled as a step in a part program to operate the machine vision inspection system 10 to perform inspection and measurement operations on acquired images.

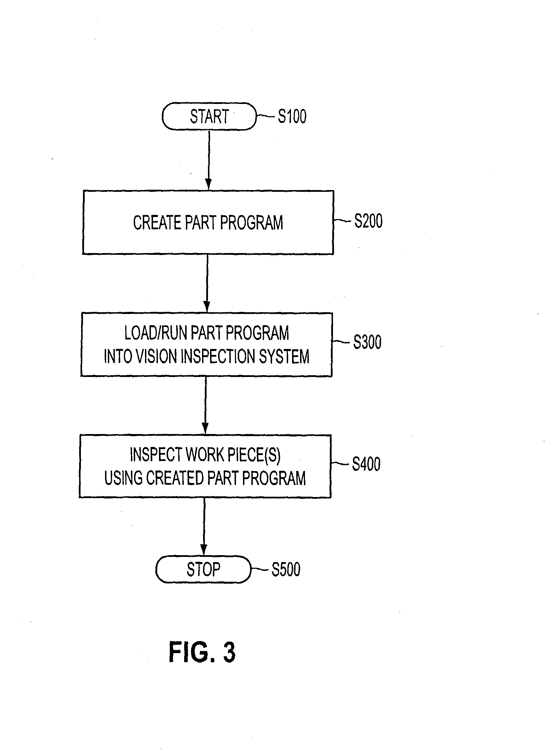

Fig. 3 is a flowchart outlining one exemplary embodiment of a method for creating and using a part program to inspect a workpiece having a highly-textured and/or low-contrast surface on which a number of lines are embedded on, formed on or in or superimposed on the highly-textured and/or low-contrast. As shown in Fig. 3, beginning in step S100, operation continues to step S200, where a part program usable to inspect the portion of the workpiece having the highly-textured and/or low-contrast surface with the number of lines is created. Then, in step S300, the created part program is run. Next, in step S400, a number of workpieces having the highly-textured and/or low-contrast surface and number of lines are inspected using the part program. Operation then continues to step S400 where operation of the method ends.

Fig. 4 is a flowchart outlining one exemplary embodiment of a method for creating at least a portion of a part program that inspects a highly-textured and/or low-contrast workpiece having a plurality of lines embedded in, formed in and/or superimposed on the workpiece, where the lines have known relative orientations. As shown in Fig. 4, beginning in step S200, operation continues to step S205, where an operator puts a vision inspection system into a learn mode. Then, in step S210, the operator creates a first portion of a part program by manipulating the vision inspection system to place at least a desired portion of the highly-textured and/or low-contrast workpiece into a field view of the vision inspection system, focus the vision inspection system on that desired portion of the workpiece and to appropriately light that portion of the workpiece. Next, in step S215, an input image of the desired portion of the highly-textured and/or low-contrast workpiece that is in the field of view of the vision inspection system is captured. Operation then continues to step S220.

It should be appreciated that, according to this invention, the desired portion of the highly-textured and/or low-contrast workpiece will have a number of lines that have known relative orientations. That is, those lines are known to be arranged in a consistent relation to one another, for each similar workpiece. Furthermore, it should also be appreciated that, as part of step S210, the operator will define the lighting settings and/or the focus and/or field of view settings either by explicitly incorporating these values into part program instructions written in a part programming language or by adjusting the vision inspection system until the relative positions of the workpiece and the vision inspection system and the lighting on the workpiece result in an acceptable captured image, or by using both techniques. It should further be appreciated that these values for the parameters that result in the acceptable captured image are incorporated into one or more part program instructions of the part program being created.

In step S220, the captured input image is output to the control system, image processing system, or the like, of the vision inspection system. Next, in step S225, in various exemplary embodiments , the operator defines one or more line parameters or line constraints that define one or more relationships between the lines to be detected in the captured input image and/or one or more relationships to another feature in the captured image. Operation then continues to step S230. However, it should be appreciated that, in various exemplary embodiments, such line constraints, line parameters and/or relationships are not used. In such exemplary embodiments, step S225 is omitted and operation jumps directly from step S220 to step S230.

When used, these relationships can define, for example, an angle between a pair of the lines, such as 0° for parallel lines or 90° for perpendicular lines, a spacing between a pair of the lines relative to a defined origin and/or a pair of axes for the captured image, an angle between one of the lines and an edge or some other line or line-like feature or some other type of feature of the workpiece that appears in the captured input image. In various exemplary embodiments, the operator applies one or more image processing and/or feature analysis tools to the input image to determine and/or define these one or more line parameters, line constraints and/or relationships. Examples of such operations are described below with reference Fig. 5. Additionally, in various other exemplary embodiments, these line parameters, line constraints and/or relationships, in addition to or in place of being defined by the operator, can be extracted from workpiece definition data, such as a CAD file defining the workpiece.

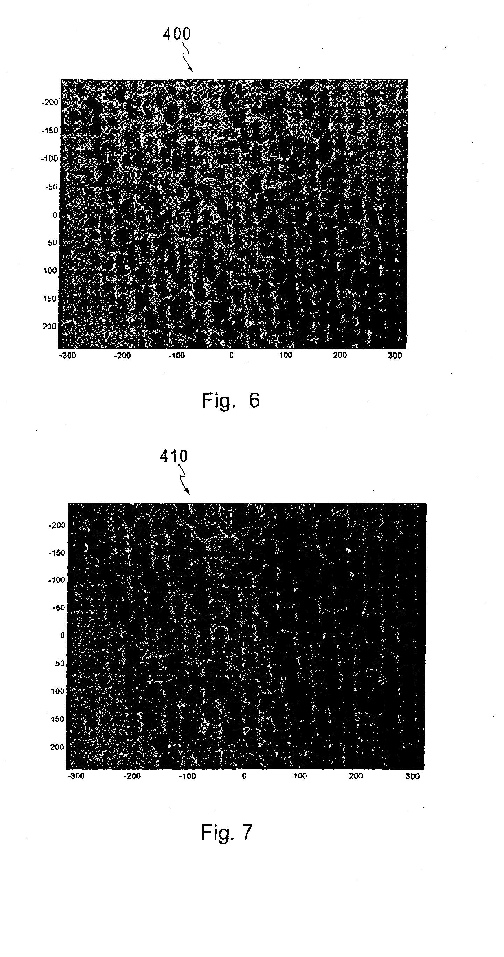

In step S230, a first or next value for at least one treatment parameter is selected as a current value. In those exemplary embodiments that include step S225, the treatment parameter may be determined based at least partly on one or more of the defined or determined line parameters, line constraints and/or relationships, such as for example, the line spacing. Related considerations are discussed in greater detail below with reference to Figs. 5-7. Next, in step S235, the current value of the treatment parameter is used to generate a treatment image from the captured image. Then, in step S240, a determination is made whether the generated treated image is acceptable. If so, operation jumps to step S245. Otherwise, operation returns to step S230, where another value for the treatment parameter is selected as the current value. It should be appreciated that, in step S240, the determination can be made by displaying the resulting treated image to the operator for approval. In various other exemplary embodiments, the determination can be made by automatically analyzing the treated image without the operator's input. Related considerations are discussed in greater detail below with reference to Figs. 6 and 7.

In step S245, once an appropriate treated image is obtained, a part program instruction for generating the treated images using the current value of the treatment parameter is generated or recorded. Then, in step S250, a first or next value for a membership parameter is selected as a current value of the membership parameter. Next, in step S255, the current value of the line membership parameter is used to generate a membership image from the treated image. Then, in step S260, a determination is made whether the generated membership image is acceptable. If so, operation continues to step S5265. Otherwise, operation returns to step S250, where another value for the line membership parameter is selected as the current value.

It should be appreciated that, in various exemplary embodiments, the determination in step S260 is performed by displaying the membership image to the operator for review and approval. In various other exemplary embodiments, in addition to or in place of operator approval, the determination in step S260 can be made automatically. It should further be appreciated that the selection in step S255 can be made automatically or can be made by the operator, either initially and/or after the current membership image has been rejected. Various considerations related to membership image determination are discussed in greater detail below with reference to Figs. 8 and 9.

In step S265, after a suitable value for the membership parameter has been determined, a part program instruction is created or recorded to generate the membership image from the treated images in the determined line membership parameter. Then, in step S270, a line transform is applied to the membership image to convert the membership image into a transform data set that is capable of being analyzed to identify line parameters, such as number of lines, relative or absolute angle, relative or absolute spacing and/or the like, of the lines that are present in the original captured image. Operation then continues to step S275.

As outlined above, in various exemplary embodiments, the line transform to be applied to the membership image can be the Radon transform, the Hough transform, or any other known or later-developed transform that allows the determination of at least some of the line parameters that characterize the lines to be determined for the workpiece. It should be appreciated that, in various exemplary embodiments according to this invention that include step S225, it is desirable if the line transform provides the transform data in a parameter space format that corresponds to the parameters used to characterize the line parameters, line constraints and/or relationships, or the like, as outlined above. In various exemplary embodiments, these parameters can include line angles and/or line offsets and/or locations relative to the axes and/or relative to an origin of a reference coordinate system.

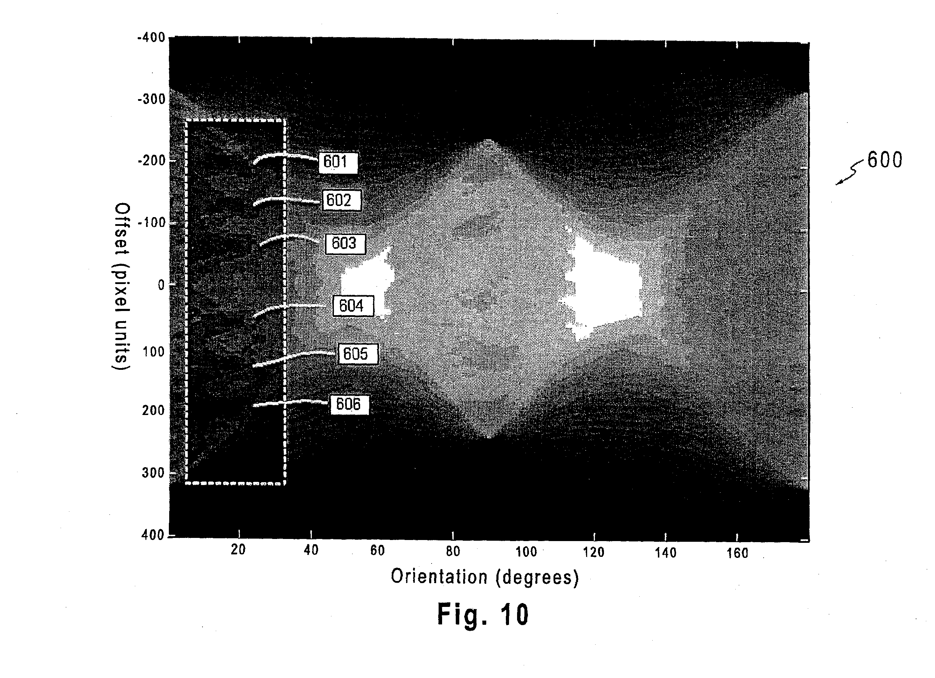

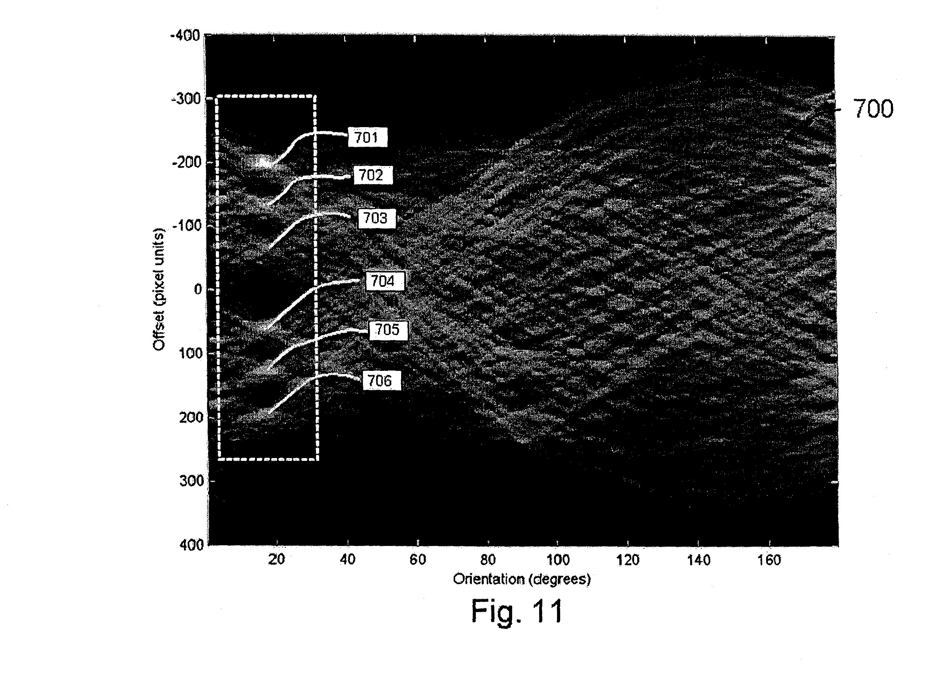

In step S275, a first or next value for a transform analysis parameter, or, for one or more of a plurality of transform analysis parameters, is selected as the current value(s). Next, in step S280, the current value(s) of the transform analysis parameter(s) is (are) used to identify particular array elements in the transform data set that represent lines in the original input image. Then, in step S285, a determination is made whether the identified lines, based on the current value(s) of the transform analysis parameter(s), accurately correspond to the lines in the original input image that need to be identified. If so, operation continues to step S290. Otherwise, operation returns to step S275, where a new value (or values) for the transform analysis parameter(s) is (are) selected. In particular, the transform analysis parameter(s) will be adjusted to be more selective if too many lines are identified. In contrast, the transform analysis parameter(s) will be adjusted to be less selective if fewer than all of the desired lines to be identified were in fact identified. Various considerations related to line transform operations and related transform analysis parameters are discussed in greater detail below with reference to Figs. 10 and 11.

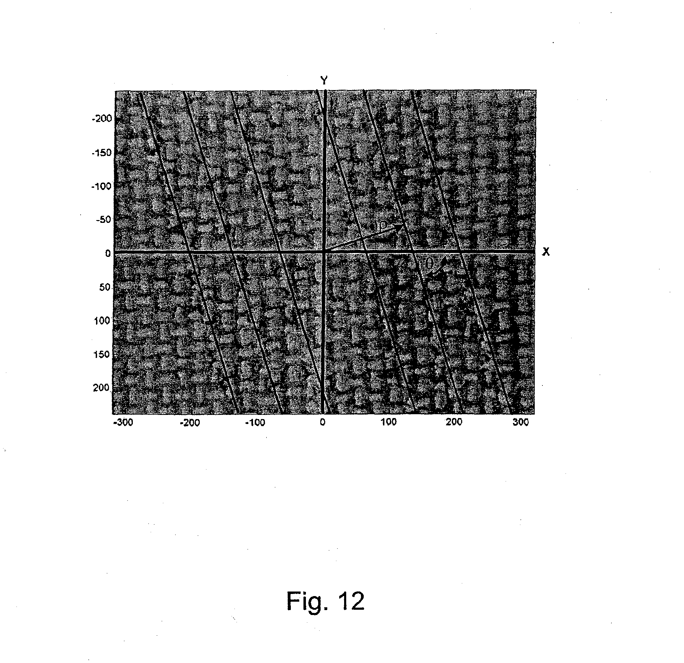

It should be appreciated that the determination in step S285 can be performed by displaying the set of identified lines to the operator for review and approval. In various exemplary embodiments, such a display includes superimposing the identified lines onto a display of the original workpiece image, as exemplified by the image shown in, for example, Fig. 12, so that an operator may judge the acceptability of the line identification results. For example, such operations are particularly useful in various exemplary embodiments that do not include the line constraint determining operations of step S225. In various other exemplary embodiments that include step S225, in addition to or in place of the operator analysis, the set of identified lines can be compared to, or otherwise evaluated using, the determined line parameters, line constraints and/or relationships manually, semi-automatically, or automatically.

In various exemplary embodiments, the operator enters program steps or operations that perform such a comparison or evaluation in learn mode, and such steps or operations are recorded in the part program instructions. In various other exemplary embodiments, the operations that perform such a comparison or evaluation are provided as previously-determined and/or recallable operations of the control system portion 100. In such situations, only the variable parameters characterizing the line constraints, such as, for example, the number of lines and/or their angles and offsets, or the like, need to be provided during part programming in order to adapt the comparison or evaluation for a particular workpiece.

In step S290, one or more part program instructions for transforming the membership image into the transform data set and for analyzing the transform data set are created or recorded based on the determined transform analysis parameter(s). Next in step S293, any additional part program generation operations are performed to complete the part program for inspecting the highly-textured and/or low-contrast image having a plurality of lines embedded in, formed on or superimposed on a workpiece. Then, in step S296, the training mode is closed. Operation then continues to step S299, where operation returns to step S300.

The foregoing description assumes that, in various exemplary embodiments, it is useful to be able to obtain or display the treated image in step S235 for evaluation or analysis in step S240. Thus, the operations for determining and evaluating the treated image are described separately from the steps S255 and S260 determining and evaluating the membership image. However, more generally, it should be appreciated that the membership image operations may also be considered to be an extension of the treated image operations. Thus, it should be appreciated that, in various exemplary embodiments, the treated image is not stored or displayable, and the various operations for determining the membership image and the treated image may be merged and/or indistinguishable.

In yet other exemplary embodiments, the treated image may be stored or displayable, while the membership image may not be stored or displayable, and the various operations used for line membership determination may be included with and indistinguishable from the various operations subsequently used for line determining, such as those line determining operations outlined above with reference to steps S270-S285 and described in greater detail below. Thus, it should be appreciated that the previously described treatment and membership image operations included in steps S230-S260 together constitute one exemplary embodiment of a more general step of processing the workpiece image to enhance probable line pixels in comparison to probable background pixels, prior to performing the transform operations included in the line determining operations.

Similarly, it should be appreciated that, particularly in various exemplary embodiments where at least one line constraint is known or determined, such as, for example, various embodiments that include step S225, step S285 may be performed automatically and the steps S275-S285 may be merged and/or indistinguishable. Thus, it should be appreciated that the previously described operations for selection of the transform analysis parameter(s), transform data analysis, and line result evaluation included in steps S275-S2850 together constitute one exemplary embodiment of a more general step of analyzing the transform data to determine or identify the lines to be determined. Such considerations related to line transform analysis parameters and line identification are discussed in greater detail below with reference to Figs. 10 and 11.

It should also be appreciated that, in those exemplary embodiments that perform the line constraint operations related to step S225, such operations may actually be performed at any convenient point in the sequence of operations shown in Fig. 4, provided that such constraint determining operations are performed before any operation that uses the resulting line constraints.

It should also be appreciated that the exemplary embodiment described with reference to Fig. 3 is generally described as an embodiment where the various image enhancement operations included in steps S230-S235 and steps S250-S255 are provided as previously determined techniques and/or recallable operations, and the variable parameters that govern such operations are generally selected by an operator, or automatically, to fully determine such operations. However, as discussed previously, in various other exemplary embodiments, a sufficiently skilled operator independently creates part program instructions to provide techniques usable in place of the operations included in steps S230-S235 and steps S250-S255, as an alternative method of providing an enhanced image usable in the operations of step S270. Such independently-created part program instructions may generally be created according to the image enhancement techniques outlined herein, in various exemplary embodiments.

Fig. 5 shows one exemplary embodiment of a captured input image 300 of a highly-textured and/or low-contrast workpiece on which a number of lines have been embedded in, formed in or on and/or superimposed on. In particular, Fig. 5 shows a woven airbag material. The image 300 was captured using a magnifying lens, such that the woven threads of the material are very evident in the image. As shown in Fig. 5, the image 300 contains a number of darker superimposed lines 301-306, which are the lines to be detected using the systems and/or methods according to this invention. Because of the texture of the woven material, the superimposed lines 301-306 actually consist primarily of line fragments distributed generally along the line locations indicated by the dashed lines in Fig. 5, which have been added in the Fig. 5 for convenience in indicating the fragmented or "noisy" lines to be detected. In capturing the image 300, raised areas of the woven material reflected relatively more light to the image capture device and thus appear lighter in the image 300. Thus, the dark portions of the image represent both the lines 301-306 as well as portions of the highly-textured material that are "valleys" in the woven material and therefore receive less light and/or reflect less light to the image capture device. Thus, there is relatively low contrast between the dark portions due to the lines 301-306 and the dark portions of the image caused by the space between the threads and the valleys" in the woven material.

Because the highly-textured material is also highly regular, the threads of the highly-textured woven material produce line-like features, as exemplified by the line-like feature 307 in the image 300, or the "valleys" in the weave adjacent to the line-like feature 307, and their similar horizontal counterparts. It should be appreciated that such line-like features will also generally produce many corresponding maxima (minima) in the line transform space. However, it should also be appreciated that the operations previously described for producing the treated image and the membership image result in images that can be transformed by a line transform to provide global maxima (or minima, if applicable) in the transform space correspond to the lines to be detected and such global maxima (or minima, if applicable) can be identified at high speed and with good reliability in comparison to various local maxima (minima) identification and analysis methods.

Furthermore, it should be appreciated that, in various exemplary embodiments where the operations previously described for determining one or more line constraints or parameters are performed, and those constraints are applied to screen candidate array elements or bins as previously described, these line-like features in the background can be more easily distinguished from the lines to be detected. Furthermore, in a further modification of such exemplary embodiments, one or more maxima (minima) corresponding to such line-like background features, especially the angular orientation coordinate of such maxima (minima), may provide a reference line angle that is useful for robustly screening and/or identifying the actual lines to be detected, as described below with respect to line segments 343 and 353.

Fig. 5 also shows a number of video tool features that were positioned on the image by the operator, or in various exemplary embodiments, that were positioned automatically, using appropriate image processing and/or analysis tools. In particular, in the exemplary embodiment shown in Fig. 5, a number of point identifying marks 320 associated with an exemplary "point tool" or the like, that is available in a variety commercial machine vision systems and software, were placed at locations that are estimated by the operator to correspond to the locations of the lines 301-306 in the image 300. These point identifying marks 320 have locations in the image 300 that are defined relative to a coordinate system origin 310, which is positioned at the center of the image 300, in the exemplary embodiment shown in Fig. 5. Based on identifying the distances between these point identifying marks 320, for example, using a "distance tool", or the like, that is available in a variety commercial machine vision systems and software, the distances or line spacings 331-335 between adjacent pairs of the lines 301-306 can be determined.

In addition, a general angular orientation of the lines 301-306 can be defined by using a first line-defining set of marks 340 placed on one of the lines, such as the line 304 in Fig. 5, and a second line-defining set of marks 350 that are placed relative to the background line-like feature 307. In particular, in the particular example shown in Fig. 5, one of the line parameters, line constraints or relationships that is defined for the lines 301-306 is their angle relative to a relatively fixed feature of the workpiece background weave shown in the image 300.

Accordingly, the first line-defining set of marks 340, which comprises a set of marks 341 and 342 defining a line segment 343, are positioned on one of the lines 301-306, such as the line 304. Similarly, the line-defining set of marks 350, which includes marks 351 and 352, defining a line segment 353, are positioned on a line-like feature of the background surface of the workpiece, such as the line-like weave feature 307. Based on these marks, the systems and methods according to this invention can determine an angle between the line segment 343 and the line segment 353. Based on identifying the angles of the line segments 343 and 353, for example, using an "angle tool", or the like, that is available in a variety commercial machine vision systems and software, the angles of the lines 301-306 can be determined in a coordinate system used with the machine vision system and/or the relative angle between the line segments can be determined. In various exemplary embodiments, the systems and methods according to this invention will treat the relative angle between any line to be detected and a background line-like feature as a line constraint that is to be met when detecting subsequent lines formed on subsequent workpieces that will subsequently be analyzed according to the systems and methods of this invention.

Likewise, the spacings 331-335 defined between the lines 301-306 define line parameters, line constraints and/or relationships that may need to be met by a subsequent set of lines formed on or in, embedded in, or superimposed on another workpiece that is inspected at a later time. Additionally, the spacings 331-335 can also be used to determine or define the treatment parameter(s) used to enhance the visibility of the lines 301-306 in a treated image generated from the image 300.

Figs. 6 and 7 show two exemplary embodiments of treated images 400 and 410, respectively, where the image treatment operations are similar to the previously described analysis of a neighborhood around each pixel of the captured image and identifying the lowest image value in that neighborhood around that pixel. As described above, to determine the treated image, each respective pixel is given that identified lowest image value from its respective neighborhood. For Figs. 6 and 7, respectively, two different values for the neighborhood radius treatment parameter were used. In particular, in Fig. 6, the value of the treatment parameter, that is, the size of the neighborhood around which each pixel is analyzed to determine the minimum (or maximum) image value, was set to 5 pixels. Thus, for each pixel in the image 300, a set of pixels included in a circular region having a radius of 5 times the pixel pitch around that pixel were analyzed to select the minimum (or maximum) image value that appears in that 5x5 window. In contrast, Fig. 7 shows the treatment image obtained when the value of the treatment parameter was set to 8 pixels, thus defining a circular region having a radius of 8 times the pixel pitch around each pixel in the captured image 300.

As shown in Figs. 6 and 7, in the treated images 400 and 410, the treatment parameter results in evening out of the image intensity of the background portion of the image 300, such that the line-like features of the weave that appear in the image 300 are less noticeable. At the same time, the somewhat darker fragments of the lines 301-306 are expanded so that they become more prominent, wider, and more continuous. For example, in Fig. 6, the lines 301-306 are much more noticeable relative to the background. However, because the value for the treatment parameter is sufficiently low, while the lines are more distinct, they remain relatively narrow and localized. It should be appreciated that the treatment parameter is typically chosen so that the treated lines do not become so broad as to approach or merge into each other.

In comparison, in Fig. 7, the value of the treatment parameter is relatively increased. As shown in Fig. 7, this results in generally lower contrast between the pixels corresponding to lines to be detected and the background pixels. Also, this results in the lines 301-303 and the lines 304-306 tending to more closely approach each other in the treated image. In other words, this results in the background image pixels between two lines, such as the lines 301 and 302, for example, having their image intensities changed such that, at various location, a bridge having the image value of the lines is formed, or nearly formed, between the lines 301 and 302. Thus, the location of the lines to be detected becomes less well defined, relative to the results shown in Fig. 6.

In various exemplary embodiments, in operation, after a particular value(s) for one or more treatment parameters is (are) selected, a test treatment image, such as the treatment image 400 shown in Fig. 6, is generated and displayed to the operator (or, in various other exemplary embodiments, is automatically analyzed). If the operator is satisfied with the displayed image, then the value(s) for the treatment parameter(s) will be used in subsequent operations generating the treatment images corresponding to subsequently captured images from similar workpieces. If not, the operator adjusts the value(s) of the treatment parameter(s) either up or down and creates a new treatment image, which is again analyzed as outlined above. For example, if the initial, but unacceptable, value for the neighborhood radius treatment parameter were 3, the operator would increase the value of the neighborhood radius treatment parameter, for example to 5, to obtain the acceptable treatment image 400 shown in Fig. 6. In contrast, if the current value of the neighborhood radius treatment parameter were 8, such as that used to generate the treatment image 410, the operator would reduce the value of the neighborhood radius treatment parameter and generate a new treatment image.

Figs. 8 and 9 show two exemplary embodiments of membership images generated from the treatment image 400 according to this invention. As shown in Figs. 8 and 9, the membership images 500 and 510, respectively, are binary images, where one image value of the binary image is assigned to pixels that exhibit characteristics associated with the lines to be detected, while the other binary value is assigned to pixels that exhibit characteristics that are different than the line pixel characteristics. In general, if the treatment image 400 has pixels having 8-bit image values, where a value of 255 represents white, then the membership image 500 or 510 can be defined by selecting a threshold or membership value that separates the darker or nearer 0-valued pixels forming the lines 301-306 from the higher-valued background pixels. In various exemplary embodiments, the membership image is conveniently determined by a single membership parameter that is defined by a point or threshold value along the range between a minimum image value and a maximum image value.

For example, in one exemplary embodiment, the inventor has determined that the image values of the pixels of the treated image can be "histogrammed" into image value bins and that the resulting histogram will generally have a peak corresponding to the highly-textured or low-contrast surface background which makes up the majority of the image. The inventor has found that it is useful, in various exemplary embodiments, to find the location of maximum change between adjacent bins, on the "proper-polarity" side of this peak. The inventor has found that it is then useful, in various exemplary embodiments, to set an image value threshold that is used as a membership parameter at approximately this value.

In the following discussion, the difference between the previously described image value of the location of maximum change and the image value of the nearest extreme of the image value range is arbitrarily assigned a value of one. In particular, the location of maximum change is assigned the value 1 and the nearest extreme of the image value range is assigned a value of zero. The inventor has found that it is useful, in one embodiment, to set the value of the image value threshold somewhat closer than "1" to the nearest extreme of the image value range. The reason for this can be seen by analyzing the membership image 500, which was generated using a value of .9 (in terms of the previous discussion) for the membership parameter. In contrast, the membership image 510 was generated using a value of the membership parameter of .8 (in terms of the previous discussion).

Because, in the membership image 510 shown in Fig. 9, the .8 value for the membership parameter was relatively less inclusive, only the pixels having the most extreme image values were identified as members of the lines 301-306. In contrast, in the membership image 500 shown in Fig. 8, the .9 value for the membership parameter was relatively more inclusive. This leaves the lines rather noisy in the membership image. This is an indication that at least some of the probable background pixels have probably been identified as members of the lines 301-306. Accordingly, there is a risk that on a different specific workpiece, or in a different specific workpiece image, such a membership parameter value may identify even more of the probable background pixels as line pixels and, potentially, include so many background pixels as line pixels that the line becomes difficult or impossible to detect or distinguish during subsequent line detection operations according to this invention.

In contrast, because in the membership image 510 shown in Fig. 9 the .8 value for the membership parameter was relatively less inclusive, , the lines 301-306 are more accurately and exclusively emphasized in the membership image 500 and are therefore more likely to be properly identified even if there are color or surface variations on a different specific workpiece, or image variations in a different specific workpiece image. However, one tradeoff is that this slightly increases the risk that on a different specific workpiece, or in a different specific workpiece image, such a membership parameter value may exclude even some of the probable line pixels and, potentially, exclude so many line pixels that the line becomes difficult to detect or distinguish during subsequent line detection operations according to this invention. Thus, especially in embodiments that include line constraints to help restrict the selection of candidate extrema to those corresponding to the actual lines to be determined, the membership value is chosen to be somewhat over-inclusive of pixels that exhibit characteristics associated with the lines to be detected rather than under-inclusive, even if this somewhat increases the "noisiness" of the lines. Accordingly, it should be appreciated that the previously discussed particular values for image value threshold are exemplary only, and not limiting, due to the overall robustness of the methods according to this invention and due to the various previously mentioned tradeoffs that may be appropriate to a particular type of workpiece inspection. It should also be appreciated that, in various exemplary embodiments according to this invention, the lines indicated in a membership image or other form of enhanced image can be quite noisy, such an image will still provide a basis for accurately and robustly identifying such lines.

Similarly to the determination of the treated image as outlined above, in various exemplary embodiments, the operator causes an initial or start membership image to be generated using an initial or start value(s) for the membership parameter(s). After being generated, the initial or start membership image is displayed to the operator to allow the operator to determine if the generated membership image is acceptable. Alternatively, in various other exemplary embodiments, the membership image is automatically analyzed. If the membership image is not acceptable, the operator modifies the value (or one or more of the values) of the membership parameter(s) (or are automatically modified) and the membership image is regenerated based on the new value(s). Once the appropriate value(s) for the membership image is (are) determined, the operator causes one or more part program instructions to be generated (or they are automatically generated) that capture the value(s) for the corresponding membership parameter(s) and that cause a membership image to be generated from subsequent treated images.

Figs. 10 and 11 are plots of the set of line transform data obtained by applying the Radon transform to an image having a number of lines. Fig. 10 shows a Radon transform plot 600, which is included here for contrast with the Radon transform plot 700 shown in Fig. 11, and to further illustrate the value of applying various membership determining operations and/or screening operations for the candidate array elements or bins, in various exemplary embodiments according to this invention. In various exemplary embodiments, the Radon transform for a set of set of transform parameters such as (spacing, angle) is defined as the line integral through an image having image values g(x,y), where the line integral is positioned corresponding to each respective value of the transform parameters (spacing,angle). The Radon transform will map the image spatial domain (x,y) to the projection domain (?,q) such that each point in the image spatial domain becomes a sine curve in the projection domain. In various exemplary embodiments, that sine curve is everywhere conveniently given an "intensity" value, or numerical value, proportional to the corresponding image value in the image that is being transformed. In particular, the Radon plot images shown in Figs. 10 and 11 were formed by accumulating these intensity values or numerical counts in each array element or bin of the Radon transform data space.

Fig. 10 illustrates the results of applying a Radon transform to the treated image 400 shown in Fig. 6. As shown in Fig. 10, one axis of the data array for the Radon plot 600 represents an offset in pixel units from an origin of the axes used to define the pixel position in the original pre-transformed image, such as the point 310 shown in Fig. 5. The other axis of the data set generated by the Radon transform represents the orientation or angle relative to a reference axis in the original image.

As outlined above, the Radon transform converts each pixel of the pre-transformed image into a line in the transform space shown in Fig. 10 based on the position of that pixel in the input image and its image intensity value. Light areas on the transform space image shown in Fig. 10 therefore represent locations where many of the transform lines corresponding to pixels in the treated image 400 intersect. In general, many of the generated lines that are included in a linear feature of the image 400 will intersect in the vicinity of a central array element or bin that best corresponds to the location of that linear feature. That occurs because the pixels used to define those intersecting lines lie on a line having that spacing from the origin of the pre-transformed image and that has that orientation relative to the reference axis of the pre-transformed image.

The features shown in Fig. 10 that correspond to the lines to be detected are barely distinguishable as the darker areas, or local minima, at the locations 601-606. Thus, it is apparent, based on the information in the Radon transform plot, that attempting to locate these lines by transforming the treated image 400 is difficult. However, it should be appreciated that the features at the locations 601-606 are nevertheless somewhat distinguishable, and in various exemplary embodiments according to this invention, if a suitable line constraint (such as the approximate line angle, which is approximately 18 degrees counterclockwise from an upward-pointing vertical axis in the example shown in Fig. 10) is used to screen the candidate array elements or bins shown in Fig. 10, then it is still possible to robustly and quickly identify the locations of the lines to be detected, even if the membership image operations are not performed in such embodiments.

In contrast to Fig. 10, Fig. 11 illustrates the Radon transform plot 700 that results from applying the Radon transform to the membership image 500 shown in Fig. 8. It should be appreciated that "intensity" values of the Radon transform plot 700 have been normalized over a different respective range than the "intensity" values of the Radon transform plot 600. Furthermore, it should be appreciated that because probable line pixels have been given the lighter binary value in the membership image 800, the lighter areas 701-706 correspond to the lines to be detected. Otherwise, the areas 701-706 are comparable in position to the areas 601-606 shown in Fig. 10. It should also be appreciated that, in contrast to the previously discussed features shown in Fig. 10, because the background region of the membership image 500 is a uniform intensity and therefore includes few or no line-like features that influence the Radon transform plot 700, the maxima 701-706 are the dominant features in Fig. 11. In fact, the maxima 701-706 are not only local maxima (comparable to the corresponding local minima in Fig. 10), they are also the global maxima of the Radon transform plot 700. Accordingly, the maxima 701-706 are particularly easily and robustly distinguishable based only on information contained within the Radon transform plot 700.

Thus, it should be appreciated that, in various exemplary embodiments according to this invention, with suitable image processing to enhance probable line pixels relative to probable background pixels, such as the previously described exemplary treated image operations and membership determining operations, it is possible to robustly and quickly identify the locations of the lines to be detected based on the line transform data, even if line constraints were not defined or determined, or the candidate array elements or bins are not screened according to any line constraints that were defined or determined. Of course, it should also be appreciated that, in various exemplary embodiments where at least one line constraint was defined or determined, such as the number of lines, or the like, related screening operations allow the lines to be detected with even greater robustness, reliability and speed under a greater variety of workpiece and workpiece image variations.

As shown in Fig. 11, when the membership image 500 is transformed to form the Radon transform plot 700 and the Radon transform plot 700 is analyzed, six lines are clearly identifiable in correspondence to the maxima 701-706 in the Radon transform plot 700. It should be appreciated that the maxima 701-706 are the global maxima in the Radon transform plot 700. Thus, in various exemplary embodiments, one or more of the corresponding lines can be identified by identifying the one or more pixel clusters exhibiting the maximum "intensity" in the data of the Radon transform plot 700, without the use of any line constraints. In this case, the operable transform analysis parameter simply selects for the one or more global maxima, or all maxima above a defined or determined threshold value.

In various other exemplary embodiments, it may simply be known or previously determined that at least "n" lines will appear in a workpiece image. In this case, the operable transform analysis parameter simply selects for "n" global maxima.

In various other exemplary embodiments, it may be known or determined that at least "n" parallel lines will appear in a workpiece image. In this case, the operable transform analysis parameter(s) select for "n" maxima aligned within a certain angular tolerance about a particular orientation value of the Radon transform plot. That is, the "n" maxima will be approximately aligned along a vertical line in Fig. 11. In various exemplary embodiments, these maxima need not be global maxima, because "n" aligned local maxima, or "n" aligned local maxima selected from among the "2n", or "3n" global maxima, or the like, is a sufficient and robust criteria.

Furthermore, it is apparent in Fig. 11, that the maxima 701-706 are grouped into two sets of three, and are spaced apart along the vertical "spacing" axis in correspondence to the lines 301-306. Each group has fairly regular spacings between the maxima corresponding to the lines. Each of the two groups lies on one side of the origin point of the pre-transformed image and all of the maxima are located at the same angle along the horizontal axis as expected for the parallel lines 301-306. Referring back to Fig. 5, the lines 301-303 have generally the same angle and have the spacing indicated in the transform data shown in Fig. 11 and lie on the negative side of the origin point 310. Similarly, the lines 304-306 have generally the same orientation and have the spacing shown in Fig. 11 and lie on the positive side of the origin point 310. Thus, is it apparent that additional line constraints that embody these various line relationships can be embodied in various related transform analysis parameters and used to identify or screen various local maxima candidates appearing in the data of the Radon transform plot, to even more robustly and reliably identify the lines to be detected in the workpiece image.

More generally, in creating the part program, the operator generates the line determination results from the transform results by applying to the transformed data one or more transform analysis parameters that select, from the various maxima in the two-dimensional array of array elements or bins (or minima, if appropriate), the most significant candidate accumulated value counts. In various exemplary embodiments, the most significant candidate accumulated value counts are of the same "maximum or minimum" polarity as the probable line pixels in the image that was transformed.. In various exemplary embodiments, the transform analysis parameter(s) may include an appropriate threshold value that eliminates array elements or bins, or clusters of array elements or bins, that are not global, or at least local, maxima (or minima, if appropriate.) In various other exemplary embodiments, the transform analysis may also include screening of the remaining global, or local, maxima (or minima, if appropriate), based on various line constraints, as previously described.

In various exemplary embodiments, if the set of identified lines corresponds to the expected number of lines to be detected, and/or if the set of identified lines accurately or sufficiently closely corresponds to the expected line constraints, such as the line spacing and/or angle data, or relationships between the appropriate number of lines, or the like, the operator determines that the transform analysis parameter value(s) is (are) appropriate and generates one or more part program instructions that incorporate or embody the value(s) of the transform analysis parameter(s). Otherwise, the operator modifies (one or more of) the transform analysis parameter value(s) and repeats the analysis of the set of transform data. If the operator is unable to identify an appropriate transform analysis parameter value, this suggests that either the membership image was inappropriately generated or the treated image was inappropriately generated. As such, the operator returns to those images and further modifies the treatment parameter(s) and/or the membership parameter(s) and revises the part program instructions generated for those values. The operator then retransforms the obtained membership image and reanalyzes the transformed data set. Once the operator is satisfied with the overall line detection results, the part program, including the values for the treatment parameter(s), the membership parameter(s) and the transform analysis parameter(s), is stored and is usable to reliably analyze subsequent instances of the workpiece.

Fig. 12 shows the original image shown in Fig. 5 with six lines superimposed over that image corresponding to the r and ? values for the six identified high-significance areas shown in Fig. 11. These superimposed lines are plotted relative to the origin point 310 shown in Figs. 5 and 12. As shown in Fig. 12, the lines identified by analyzing the transform data set plotted in Fig. 11 are very closely aligned to the lines to be identified shown in Fig. 5. Accordingly, as outlined above, it is possible to very accurately identify lines in highly-textured and/or low-contrast images based on a small number of parameters, such as one or more treatment parameters, one or more membership parameters and one or more transform analysis parameters using the systems and methods according to this invention.

When it is possible to know, determine or derive one or more line constraints, line parameters and/or relationships between the lines that are to appear in the captured image, one or more such constraints may be incorporated in various embodiments of the systems and methods according to this invention, in order to make the line detection results even faster and more robust under a greater variety of workpiece and workpiece image variations. By using these parameters and this knowledge about the relationships or mutual orientations of the various lines that are to be identified in the captured image, it becomes possible to quickly and surely create a part program that will properly process and analyze a captured image of a highly-textured and/or low-contrast surface of a workpiece on which a number of lines have been embedded in, formed in or on, or superimposed on that surface.

Additional exemplary tools and methods usable in various exemplary embodiments according to this invention for determining image acquisition settings and for performing image inspection operation are evident in commercial machine vision inspection systems such as the QUICK VISION™ series of vision inspection machines and the associated QVPAK™ software that were discussed above. However, it should be appreciated that any such tools, whether currently available or later developed, can be similarly used to determine image acquisition settings and to later perform image inspection operations, in various exemplary embodiments according to this invention.

It will be appreciated that the operations of Fig. 4 essentially define one exemplary training method that is usable to determine or define a part program that is operable to automatically inspect a workpiece at high speed. In essence, creating or "training" the part program involves learning to take images of an inspection workpiece that include all of the required workpiece features to be inspected, and initially learning or "training" a set of image inspection operations that inspect the set of workpiece inspection images in all of the required places. That image inspection routine is then stored for subsequent use on various other sets of inspection images for corresponding workpieces. As described with reference to Fig. 3, once the training mode is completed, then the inspection of multiple additional corresponding workpieces may be performed using the generated part program.

It should be appreciated that certain existing machine vision inspection systems can employ various embodiments of the systems and methods according to this invention with minimal or no "retrofit" modifications to such existing machines, and the low-contrast and noisy line-finding capability, robustness and throughput of such machines may still be increased according to the principles of this invention. In various exemplary embodiments, only the addition of machine vision inspection software methods and/or modifications according to the principles of this invention are included in the retrofit modifications.

It should also be appreciated that, particularly in the case of the applications described herein where the workpiece features to be inspected are sufficiently well documented and a corresponding workpiece is sufficiently well-located by fixturing or other set-up means, or the like, a complete routine (or set of routines) for inspecting such a workpiece can be determined entirely "off-line" without actually performing manual training operations on an actual workpiece, based on automatically, semi-automatically, or manually determining the inspection operations according to the principles of this invention, based on an electronic representation of a workpiece, such as for example, a CAD representation.

In one such exemplary automatic application of the systems and methods according to this invention, the workpiece is an airbag or a portion of an airbag. The low-contrast lines to be inspected and the related inspection parameters are identified automatically, semi-automatically, or manually based on documentation such as a list of dimensions, weave characteristics and the like, included in a workpiece designation file, such as a text file, a CAD file or the like. In conjunction with the various exemplary embodiments of the systems and methods and other aspects of the invention disclosed herein, known commercially available video tools may be selected for supporting various parameter determination operations and other inspection operations. Corresponding operable tool parameters may be determined based on general or specific experience and knowledge about the machine vision inspection system that will run the inspection operations.

## Claims

1. A method for operating a machine vision inspection system to inspect a workpiece having a highly-textured or low-contrast surface and having at least one line to be determined present in or on the highly-textured or low-contrast surface, the at least one line to be determined arranged in an arrangement that is characteristic of that type of workpiece, the method comprising:
capturing a workpiece image of at least the portion of the workpiece having the highly-textured or low-contrast surface having the at least one line to be determined;
processing the captured workpiece image to provide an enhanced image that enhances at least one characteristic of at least one of the at least one line to be determined;
transforming the enhanced image using a transform that nominally generates a 2-dimensional set of values that include local extrema nominally corresponding to probable individual lines, the local extrema including proper-polarity local extrema having a polarity corresponding to the at least one line to be determined, the two dimensional coordinates of the local extrema usable to define the corresponding individual lines;
determining the at least one line to be determined based on the 2-dimensional set of values, the determination further based at least partially on at least one previously defined line constraint corresponding to the arrangement that is characteristic of that type of workpiece.

2. The method of claim 1, wherein determining the at least one line to be determined comprises applying the at least one previously defined line constraint to restrict a selection of at least one of a) a selected set of at least one proper-polarity local extrema in the 2-dimensional set of values, the two dimensional coordinates of each local extrema in the selected set defining a corresponding line to be determined, and b) a selected set of at least one line to be determined, the selected set of at least one line to be determined being a subset of lines corresponding to a selected preliminary set of at least one proper-polarity local extrema in the 2-dimensional set of values, the two dimensional coordinates of each local extrema in the preliminary set defining a corresponding line.

3. The method of claim 1 or claim 2, wherein the at least one previously defined line constraint comprises at least one of a) a quantity constraint corresponding to a number of the at least one line to be determined, and b) a geometric relationship constraint corresponding to a geometric arrangement of the at least one line to be determined in the arrangement that is characteristic of that type of workpiece.

4. The method of claim 3, wherein the geometric relationship constraint comprises an angular orientation constraint comprising at least one of a) an angular orientation constraint corresponding to an angular relationship between at least one line to be determined and a line-like feature of the highly-textured or low-contrast surface, b) an angular orientation constraint corresponding to an angular relationship between at least one pair of lines to be determined, c) an angular orientation constraint corresponding to at least one pair of lines to be determined that are approximately parallel to one another, and d) an angular orientation constraint corresponding to an angular relationship between at least one line to be determined and a coordinate reference frame of the captured workpiece image.

5. The method of claim 3, wherein the geometric relationship constraint comprises a line spacing constraint comprising at least one of a) a line spacing constraint corresponding to a line spacing between at least one line to be determined and a line-like feature of the highly-textured or low-contrast surface, b) a line spacing constraint corresponding to a line spacing between at least one pair of lines to be determined, c) a line spacing constraint corresponding to a line spacing between at least one pair of lines to be determined that are parallel to one another, and d) a line spacing constraint corresponding to a line spacing between at least one line to be determined and a coordinate reference frame of the captured workpiece image.

6. The method of any of claims 3 to 5, wherein the selection of at least one of a) the selected set of at least one local extrema in the 2-dimensional set of values and b) the selected preliminary set of at least one local extrema in the 2-dimensional set of values comprises selecting at least one most extreme-valued proper-polarity local extremum that is included in a selection region of the 2-dimensional set of values as the set members.

7. The method of claim 6, wherein the selection comprises selecting the at least one most extreme-valued proper-polarity local extremum and further comprises restricting the selected at least one most extreme-valued proper-polarity local extremum to those set members that also correspond to the conditions of at least one line constraint.

8. The method of claim 6, wherein the selection of at least one of a) the selected set of at least one local extremum, b) the selected set of at least one line to be determined and c) the selected preliminary set of at least one local extremum comprises applying the quantity constraint to restrict the selection to a number of set members that is the same as the number of the at least one line to be determined.

9. The method of claim 6, wherein the selection region of the 2-dimensional set of values comprises one of a) the entire 2-dimensional set of values and b) a restricted portion of the 2-dimensional set of values determined based at least partially on at least one line constraint.

10. The method of claim 9, wherein the restricted portion of the 2-dimensional set of values determined based at least partially on at least one line constraint corresponds to the approximate vicinity of a one-dimensional proper-polarity global extremum of the 2-dimensional set of values.

11. The method of claim 10, wherein the one-dimensional proper-polarity global extremum of the 2-dimensional set of values corresponds to a plurality of local extrema that have an angular orientation coordinate that is at least approximately the same for each of the plurality of local extrema.

12. The method of any of the preceding claims, wherein processing the captured workpiece image to provide an enhanced image that enhances at least one characteristic of at least one of the at least one line to be determined comprises at least one of a) performing at least one operation that provides an expansion of at least some of the pixels of the image that correspond to at least one characteristic of the pixels of the at least one line to be determined and b) performing at least one operation that tends to increase the contrast between pixels corresponding to the at least one line to be determined and the highly-textured or low-contrast surface, on at least one of i) the pixels of the captured workpiece image and ii) pixels that have been processed by operations that include at least one expansion operation.

13. The method of any of the preceding claims, wherein the at least one enhanced characteristic of the at least one line to be determined comprises at least one of a) a wider line width of the pixels representing the at least one line to be determined, b) an improved continuity of the pixels representing segments of the at least one line to be determined along a length direction of the at least one line to be determined, and c) an increase in a difference between an average pixel intensity of pixels representing the at least one line to be determined and an average pixel intensity of pixels representing the highly-textured or low-contrast surface.

14. A method for programming a machine vision inspection system to inspect a workpiece having a highly-textured or low-contrast surface and having at least one line to be determined present in or on the highly-textured or low-contrast surface, the at least one line to be determined arranged in an arrangement that is characteristic of that type of workpiece, the method comprising:
capturing a workpiece image of at least the portion of the workpiece having the highly-textured or low-contrast surface having the at least one line to be determined;
determining at least one image enhancement process for processing the captured workpiece image to provide an enhanced image that enhances at least one characteristic of at least one of the at least one line to be determined;
generating at least one part program instruction operable to perform the determined image enhancement process;
transforming the enhanced image using a transform that nominally generates a 2-dimensional set of values that include local extrema nominally corresponding to probable individual lines, the local extrema including proper-polarity local extrema having a polarity corresponding to the at least one line to be determined, the two dimensional coordinates of the local extrema usable to define the corresponding individual lines;
generating at least one part program instruction operable to perform the transforming process to generate the 2-dimensional set of values;
defining at least one line constraint corresponding to the arrangement that is characteristic of that type of workpiece;
determining a process for determining the at least one line to be determined based on the 2-dimensional set of values and at least partially on at least one defined line constraint;
generating at least one part program instruction operable to perform the process for determining the at least one line to be determined based at least partially on at least one defined line constraint;
storing a set of part program instructions including at least the part program instructions operable to perform at least the determined image enhancement process, the transforming process to generate the 2-dimensional set of values, and the process for determining the at least one line to be determined based at least partially on at least one defined line constraint, the set of part program instructions at least operable to determine the at least one line to be determined on a workpiece of that type.

15. The method of claim 14, wherein:
the image enhancement process comprises a previously determined technique, the previously determined technique governable by one or more selectable parameters; and
determining an image enhancement process comprises selecting values for the one or more selectable parameters to fully determine the image enhancement process for that type of workpiece.

16. The method of claim 15, wherein determining an image enhancement process comprises:
iteratively determining the image enhancement process by selecting the values for the one or more selectable parameters;
observing a process result corresponding to the selected parameter values; and
repeating the selecting and results observing steps until the selected parameter values produce a satisfactory result.

17. The method of any of claims 14 to 16, wherein:
the process for determining the at least one line to be determined comprises a previously determined technique, the previously determined technique governable by one or more selectable parameters; and
determining a process for determining the at least one line to be determined comprises selecting values for the one or more selectable parameters to fully determine the at least one line to be determined determining process for that type of workpiece.

18. The method of claim 15 wherein determining a process for determining the at least one line to be determined comprises:
iteratively determining a process for determining the at least one line to be determined by selecting the values for the one or more selectable parameters;
observing a process result corresponding to the selected parameter values; and
repeating the selecting and results observing steps until the selected parameter values produce a satisfactory result.

19. A method for operating a machine vision inspection system to inspect a workpiece having a highly-textured or low-contrast surface and having at least two lines to be determined present in or on the highly-textured or low-contrast surface, the at least two lines to be determined arranged in an arrangement that is characteristic of that type of workpiece, the method comprising:
capturing a workpiece image of at least the portion of the workpiece having the highly-textured or low-contrast surface having the at least two lines to be determined;
processing the captured workpiece image to provide an enhanced image that enhances at least one characteristic of the at least two lines to be determined;
transforming the enhanced image using a transform that nominally generates a 2-dimensional set of values that include local extrema nominally corresponding to probable individual lines, the local extrema including proper-polarity local extrema having a polarity corresponding to the at least two lines to be determined, the two dimensional coordinates of the local extrema usable to define the corresponding individual lines;
analyzing the 2-dimensional set of values to select at least two proper-polarity local extrema such that the selected at least two local proper-polarity extrema comprise most extreme-valued proper-polarity local extrema that also correspond to lines arranged in the arrangement that is characteristic of that type of workpiece; and
determining the at least two lines to be determined based on the two dimensional coordinates of the selected at least two local extrema.

20. The method of claim 19, wherein the at least one enhanced characteristic of the at least two lines to be determined comprises at least one of a wider line width of the pixels representing the at least two lines to be determined, an improved continuity of the respective pixels representing segments of each of the at least two lines to be determined along respective length directions of the at least two lines to be determined, and an increase in a difference between an average pixel intensity of the pixels representing the at least two lines to be determined and an average pixel intensity of the pixels representing the highly-textured or low-contrast surface.

21. A method for programming a machine vision inspection system to inspect a workpiece having a highly-textured or low-contrast surface and having at least two lines to be determined present in or on the highly-textured or low-contrast surface, the at least two lines to be determined arranged in an arrangement that is characteristic of that type of workpiece, the method comprising:
capturing a workpiece image of at least the portion of the workpiece having the highly-textured or low-contrast surface having the at least two lines to be determined;
determining an image enhancement process for processing the captured workpiece image to provide an enhanced image that enhances at least one characteristic of the at least two lines to be determined;
generating at least one part program instruction operable to perform the determined image enhancement process;
transforming the enhanced image using a transform that nominally generates a 2-dimensional set of values that include local extrema nominally corresponding to probable individual lines, the local extrema including proper-polarity local extrema having a polarity corresponding to the at least two lines to be determined, the two dimensional coordinates of the local extrema usable to define the corresponding individual lines;
generating at least one part program instruction operable to perform the transforming process to generate the 2-dimensional set of values;
determining a process for analyzing the 2-dimensional set of values to select at least two proper-polarity local extrema such that the selected at least two proper-polarity local extrema comprise most extreme-valued proper-polarity local extrema that also correspond to lines arranged in the arrangement that is characteristic of that type of workpiece;
generating at least one part program instruction operable to perform that process for analyzing the 2-dimensional set of values to select the at least two proper-polarity local extrema that comprise the most extreme-valued proper-polarity local extrema that also correspond to lines arranged in the arrangement that is characteristic of that type of workpiece; and
storing a set of part program instructions including at least the part program instructions operable to perform at least the determined image enhancement process, the transforming process to generate the 2-dimensional set of values and the process for analyzing the 2-dimensional set of values to select at least two proper-polarity local extrema that comprise the most extreme-valued proper-polarity local extrema that also correspond to lines arranged in the arrangement that is characteristic of that type of workpiece, the set of part program instructions at least operable to determine the at least two lines to be determined on a workpiece of that type based on the selected at least two proper-polarity local extrema that comprise the most extreme-valued proper-polarity local extrema that also correspond to lines arranged in the arrangement that is characteristic of that type of workpiece.

22. The method of claim 21, wherein:
the image enhancement process comprises a previously determined technique, the previously determined technique governable by one or more selectable parameters; and
determining an image enhancement process comprises selecting values for the one or more selectable parameters to fully determine the image enhancement determining process for that type of workpiece.

23. The method of claim 21 or claim 22, wherein:
the process for analyzing the 2-dimensional set of values to select the at least two proper-polarity local extrema that comprise the most extreme-valued proper-polarity local extrema that also correspond to lines arranged in the arrangement that is characteristic of that type of workpiece comprises a previously determined technique, the previously determined technique governable by one or more selectable parameters; and
the process for analyzing the 2-dimensional set of values to select the at least two proper-polarity local extrema comprises selecting values for the one or more selectable parameters to fully determine the 2-dimensional set of values analyzing process for that type of workpiece.
